(19) **Europäisches Patentamt / European Patent Office / Office européen des brevets**

(11) **EP 4 445 248 B1**

(12) **EUROPEAN PATENT SPECIFICATION**

(45) Date of publication and mention
of the grant of the patent:
**20.05.2026 Bulletin 2026/21**

(21) Application number: **22916836.4**

(22) Date of filing: **30.12.2022**

(51) International Patent Classification (IPC):
*G06F 3/01* (2006.01)    *G06T 19/00* (2011.01)
*G06Q 50/10* (2012.01)    *G02B 27/01* (2006.01)
*H04L 67/131* (2022.01)    *H04L 67/141* (2022.01)

(52) Cooperative Patent Classification (CPC):
**G06T 19/006; G06T 15/005; H04L 65/1069;
H04L 65/612; H04L 65/80; H04L 67/131;
H04L 67/141; H04L 65/1063**

(86) International application number:
**PCT/KR2022/021716**

(87) International publication number:
**WO 2023/128695 (06.07.2023 Gazette 2023/27)**

(54) **DEFERRED RENDERING ON EXTENDED REALITY (XR) DEVICES**

VERZÖGERTE WIEDERGABE AUF VORRICHTUNGEN DER ERWEITERTEN REALITÄT (XR)

RESTITUTION DIFFÉRÉE SUR DES DISPOSITIFS DE RÉALITÉ ÉTENDUE (XR)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **01.01.2022 US 202263295859 P
05.05.2022 US 202263338575 P
20.10.2022 US 202218048352**

(43) Date of publication of application:
**16.10.2024 Bulletin 2024/42**

(73) Proprietor: **Samsung Electronics Co., Ltd.
Suwon-si, Gyeonggi-do 16677 (KR)**

(72) Inventors:
- **PERI, Christopher Anthony
  Mountain View, California 94043 (US)**
- **YIP, Eric
  Suwon-si, Gyeonggi-do 16677 (KR)**

(74) Representative: **HGF
HGF Limited
4th Floor, 1 City Square
Leeds LS1 2ES (GB)**

(56) References cited:
KR-B1- 100 962 557    US-A1- 2015 002 542
US-A1- 2018 108 110    US-A1- 2018 324 229
US-A1- 2021 173 340    US-B2- 11 037 200

- **"3rd Generation Partnership Project; Technical Specification Group SA; Support of 5G Glass-type Augmented Reality / Mixed Reality (AR/MR) devices; (Release 17)"**, 19 November 2021 (2021-11-19), XP052079208, Retrieved from the Internet <URL:https://ftp.3gpp.org/tsg_sa/WG4_CODEC/TSGS4_116-e/Docs/S4-211545.zip S4-211545.doc> [retrieved on 20211119]
- **TENCENT CLOUD: "[FS_5GSTAR] Updates to 6.2.4. procedures and call flows for STAR and EDGAR based media streaming", vol. SA WG4, no. 20211110 - 20211119, 4 November 2021 (2021-11-04), XP052179741**, Retrieved from the Internet <URL:https://ftp.3gpp.org/tsg_sa/WG4_CODEC/TSGS4_116-e/Docs/S4-211407.zip S4-211407-5GSTAR-StreamingCallflowUpdate.docx> [retrieved on 20211104]

**Description**

**Technical Field**

This disclosure generally relates to extended reality (XR) devices and processes. More specifically, this disclosure relates to an XR device and a method for deferred rendering on the XR device.

**Background Art**

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/ protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

Recent advances in immersive multimedia experiences have occurred due to research and development into the capture, storage, compression, and presentation of immersive multimedia. While some focus on higher resolutions for video (such as 8K resolution) on ever larger TV displays with immersive technologies like high dynamic range (HDR), much focus in multimedia consumption is on a more personalized experience using portable devices (such as mobile smartphones and tablet computers). Other trending branches of immersive multimedia are virtual reality (VR) and augmented reality (AR). VR and AR multimedia typically require a user to wear a corresponding VR or AR headset, where the user is presented with a virtual world or augmented features localized into the real world such that the augmented features appear to be a part of the real world. "3rd Generation Partnership Project; Technical Specification Group SA; Support of 5G Glass-type Augmented Reality / Mixed Reality (AR/MR) devices; (Release 17)", 3GPP DRAFT; S4-211545, 19 November 2021 relates to integration of AR and MR devices into 5G system networks. "[FS_5GSTAR] Updates to 6.2.4. procedures and call flows for STAR and EDGAR based media streaming", 3GPP DRAFT; S4-211407, 3RD GENERATION PARTNERSHIP PROJECT (3GPP), vol. SA WG4, no. 20211110 - 20211119 4 November 2021 (2021-11-04), relates to integration of AR and MR devices into 5G system networks.

**Disclosure of Invention**

**Technical Problem**

This disclosure relates to deferred rendering on extended reality (XR) devices.

**Solution to Problem**

In a first embodiment, a method for deferred rendering on an XR device includes establishing a transport session for content on the XR device with a server. The method also includes performing a loop configuration for the content based on the transport session between the XR device and the server. The method further includes providing pose information based on parameters of the loop configuration to the server. The method also includes receiving pre-rendered content based on the pose information from the server. In addition, the method includes processing and displaying the pre-rendered content on the XR device.

In a second embodiment, an XR device includes a transceiver configured to communicate with a server and at least one processing device operably coupled to the transceiver. The at least one processing device is configured to establish a transport session for content on the XR device with the server. The at least one processing device is also configured to perform a loop configuration for the content based on the transport session between the XR device and the server. The at least one processing device is further configured to provide pose information based on parameters of the loop configuration to the server. The at least one processing device is also configured to receive pre-rendered content based on the pose information from the server. In addition, the at least one processing device is configured to process and display the pre-rendered content on the XR device.

In a third embodiment, a non-transitory machine readable medium contains instructions that when executed cause at least one processor to establish a transport session for content on an XR device with a server. The non-transitory machine readable medium also contains instructions that when executed cause the at least one processor to perform a loop configuration for the content based on the transport session between the XR device and the server. The non-transitory machine readable medium further contains instructions that when executed cause the at least one processor to provide pose information based on parameters of the loop configuration to the server. The non-transitory machine readable medium also contains instructions that when executed cause the at least one processor to receive pre-rendered content based on the pose information from the server. In addition, the non-transitory machine readable medium contains instructions that when executed cause the at least one processor to process and display the pre-rendered content on the XR device.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like.

Moreover, various functions described below can be implemented or supported by one or more computer programs, each of which is formed from computer readable program code and embodied in a computer readable medium.

The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

As used here, terms and phrases such as "have," "may have," "include," or "may include" a feature (like a number, function, operation, or component such as a part) indicate the existence of the feature and do not exclude the existence of other features. Also, as used here, the phrases "A or B," "at least one of A and/or B," or "one or more of A and/or B" may include all possible combinations of A and B. For example, "A or B," "at least one of A and B," and "at least one of A or B" may indicate all of (1) including at least one A, (2) including at least one B, or (3) including at least one A and at least one B. Further, as used here, the terms "first" and "second" may modify various components regardless of importance and do not limit the components. These terms are only used to distinguish one component from another. For example, a first user device and a second user device may indicate different user devices from each other, regardless of the order or importance of the devices. A first component may be denoted a second component and vice versa without departing from the scope of this disclosure.

It will be understood that, when an element (such as a first element) is referred to as being (operatively or communicatively) "coupled with/to" or "connected with/to" another element (such as a second element), it can be coupled or connected with/to the other element directly or via a third element. In contrast, it will be understood that, when an element (such as a first element) is referred to as being "directly coupled with/ to" or "directly connected with/to" another element (such as a second element), no other element (such as a third element) intervenes between the element and the other element.

As used here, the phrase "configured (or set) to" may be interchangeably used with the phrases "suitable for," "having the capacity to," "designed to," "adapted to," "made to," or "capable of" depending on the circumstances. The phrase "configured (or set) to" does not essentially mean "specifically designed in hardware to." Rather, the phrase "configured to" may mean that a device can perform an operation together with another device or parts. For example, the phrase "processor configured (or set) to perform A, B, and C" may mean a generic-purpose processor (such as a CPU or application processor) that may perform the operations by executing one or more software programs stored in a memory device or a dedicated processor (such as an embedded processor) for performing the operations.

The terms and phrases as used here are provided merely to describe some embodiments of this disclosure but not to limit the scope of other embodiments of this disclosure. It is to be understood that the singular forms "a," "an," and "the" include plural references unless the context clearly dictates otherwise. All terms and phrases, including technical and scientific terms and phrases, used here have the same meanings as commonly understood by one of ordinary skill in the art to which the embodiments of this disclosure belong. It will be further understood that terms and phrases, such as those defined in commonly-used dictionaries, should be interpreted as having a meaning that is consistent with their meaning in the context of the relevant art and will not be interpreted in an idealized or overly formal sense unless expressly so defined here. In some cases, the terms and phrases defined here may be interpreted to exclude embodiments of this disclosure.

Examples of an "electronic device" according to embodiments of this disclosure may include at least one of a smartphone, a tablet personal computer (PC), a mobile phone, a video phone, an e-book reader, a desktop PC, a laptop computer, a netbook computer, a workstation, a personal digital assistant (PDA), a portable multimedia player (PMP), an MP3 player, a mobile medical device, a camera, or a wearable device (such as smart glasses, a head-mounted device (HMD), electronic clothes, an electronic bracelet, an electronic necklace, an electronic accessory, an electronic tattoo, a smart mirror, or a smart watch). Other examples of an electronic device include a smart home appliance. Examples of the smart home appliance may include at least one of a television, a digital video disc (DVD) player, an audio player, a refrigerator, an air conditioner, a cleaner, an oven, a microwave oven, a washer, a drier, an air cleaner, a set-top box, a home automation control panel, a security control panel, a TV box (such as SAMSUNG HOMESYNC, APPLETV, or GOOGLE TV), a smart speaker or speaker with an integrated digital assistant (such as SAMSUNG GALAXY HOME, APPLE HOMEPOD, or AMAZON ECHO), a gaming console (such as an XBOX, PLAYSTATION, or NINTENDO), an electronic dictionary, an electronic key, a camcorder, or an electronic picture frame. Still other examples of an electronic device include at least one of various medical devices (such as diverse portable medical measuring devices (like a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global positioning system (GPS) receiver, an event data recorder (EDR), a flight data recorder (FDR), an automotive infotainment device, a sailing electronic device (such as a sailing navigation device or a gyro compass), avionics, security devices, vehicular head units, industrial or home robots, automatic teller machines (ATMs), point of sales (POS) devices, or Internet of Things (IoT) devices (such as a bulb, various sensors, electric or gas meter, sprinkler, fire alarm, thermostat, street light, toaster, fitness equipment, hot water tank, heater, or boiler). Other examples of an electronic device include at least one part of a piece of furniture or building/structure, an electronic board, an electronic signature receiving device, a projector, or various measurement devices (such as devices for measuring water, electricity, gas, or electromagnetic waves). Note that, according to various embodiments of this disclosure, an electronic device may be one or a combination of the above-listed devices. According to some embodiments of this disclosure, the electronic device may be a flexible electronic device. The electronic device disclosed here is not limited to the above-listed devices and may include any other electronic devices now known or later developed.

In the following description, electronic devices are described with reference to the accompanying drawings, according to various embodiments of this disclosure. As used here, the term "user" may denote a human or another device (such as an artificial intelligent electronic device) using the electronic device.

Definitions for other certain words and phrases may be provided throughout this patent document. Those of ordinary skill in the art should understand that in many if not most instances, such definitions apply to prior as well as future uses of such defined words and phrases.

None of the description in this application should be read as implying that any particular element, step, or function is an essential element that must be included in the claim scope. The scope of patented subject matter is defined only by the claims.

**Brief Description of Drawings**

For a more complete understanding of the present disclosure and its advantages, reference is now made to the following description taken in conjunction with the accompanying drawings, in which like reference numerals represent like parts:

FIGURE 1 illustrates an example network configuration including an electronic device in accordance with this disclosure;
FIGURE 2 illustrates example use cases for extended reality (XR) devices in accordance with this disclosure;
FIGURES 3A and 3B illustrate an example technique for rendering immersive media by an XR device in accordance with this disclosure;
FIGURES 4A and 4B illustrate an example technique for rendering immersive media using server assistance in accordance with this disclosure;
FIGURES 5A and 5B illustrate an example technique for using a media session loop between a user equipment (UE) and a server in accordance with this disclosure;
FIGURES 6A and 6B illustrate an example environment for device functions related to pose information delivery configuration in accordance with this disclosure;
FIGURE 7 illustrates an example technique for pose information delivery configuration and frame recycling decisions by a UE in accordance with this disclosure;
FIGURE 8 illustrates an example graphical representation of object safe boundary description metadata in accordance with this disclosure;
FIGURE 9 illustrates an example system for efficiently communicating with a remote computing system and an immersive device in accordance with this disclosure;
FIGURE 10 illustrates an example comprehensive computer vision system in accordance with this disclosure;
FIGURE 11 illustrates an example software stack for an immersive device in accordance with this disclosure;
FIGURE 12 illustrates an example method for deferred rendering on an immersive device that is tethered to an electronic device in accordance with this disclosure; and
FIGURE 13 illustrates another example method for deferred rendering on an immersive device in accordance with this disclosure.

**Mode for the Invention**

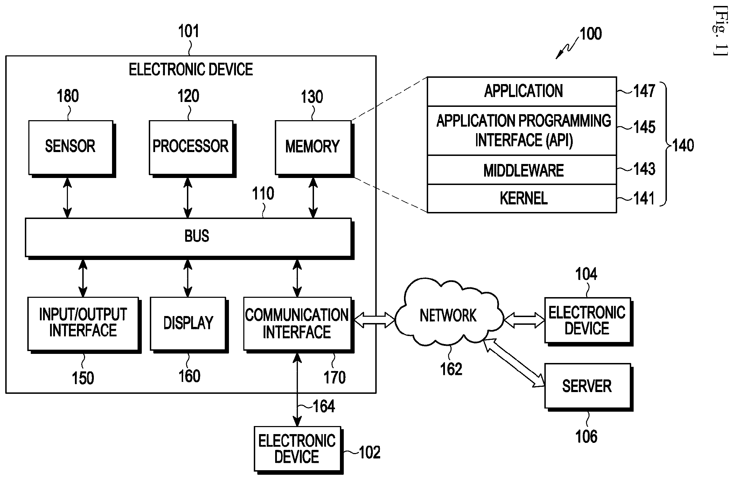

FIGURES 1 through 13, described below, and the various embodiments of this disclosure are described with reference to the accompanying drawings. However, it should be appreciated that this disclosure is not limited to these embodiments and all changes and/or equivalents or replacements thereto also belong to the scope of this disclosure.

As noted above, recent advances in immersive multimedia experiences have occurred due to research and development into the capture, storage, compression, and presentation of immersive multimedia. While some focus on higher resolutions for video (such as 8K resolution) on ever larger TV displays with immersive technologies like high dynamic range (HDR), much focus in multimedia consumption is on a more personalized experience using portable devices (such as mobile smartphones and tablet computers). Other trending branches of immersive multimedia are virtual reality (VR) and augmented reality (AR). VR and AR multimedia typically require a user to wear a corresponding VR or AR headset, where the user is presented with a virtual world or augmented features localized into the real world such that the augmented features appear to be a part of the real world.

Multimedia content processing can include various functions (such as authoring, pre-processing, post-processing, metadata generation, delivery, decoding, and rendering) of VR, AR, and mixed reality (MR) contents. VR, AR, and MR are generally referred to collectively as extended reality (XR). Among other things, XR contents can include two-dimensional (2D) videos, 360° videos, and three-dimensional (3D) media represented by point clouds and meshes. Multimedia contents can include scene descriptions, dynamic scene descriptions, dynamic scene descriptions supporting timed media, and scene description formats (such as Graphics Language Transmission Format or "glTF," Moving Picture Experts Group or "MPEG," and ISO Base Media File Format or "ISOBMFF" file formats). The multimedia contents can include support for immersive contents and media, split rendering between AR glasses, split rendering between a tethered device and a cloud/edge server, etc. Various improvements in media contents can include rendering resource optimization that considers pose information, content properties, re-projection, etc. Various improvements in media contents can also include hardware resource optimization that considers operating modes between an application, a remote computer/server, and an XR device.

One challenge in XR applications is the production of multimedia contents for immersive experiences. While some production of animations and artificial contents (such as graphics in a game) is available, high-quality capture of real-life objects and scenes (such as by performing a 3D capture equivalent to that of a 2D video captured by a camera) can provide a truly immersive experience for XR devices. Typically, artificially-created contents and captured real-life objects and scenes may require scene descriptions in order to describe the scenes that the contents are attempting to represent. A scene description is typically represented by a scene graph, such as in a format using glTF or Universal Scene Description (USD). A scene graph describes objects in a scene, including their various properties like their locations, textures, and other information. A glTF scene graph expresses this information as a set of nodes that can be represented as a node graph. The exact format used for glTF is the JavaScript Object Notation (JSON) format, meaning that a glTF file is stored as a JSON document.

A specific challenge in immersive media rendering is related to the form factor of XR devices, such as AR devices that typically resemble a pair of glasses. Due to this type of form factor, design restrictions on weight, bulkiness, and overheating related to portability and comfort can affect the overall battery life and capabilities of the devices. Unfortunately, high processing requirements for rendering and displaying immersive contents conflict with battery-life expectations of consumers, especially for glasses-type wearable devices that can be worn even when a fully-immersive XR experience is not required. In other words, the processing capabilities for some XR devices can be limited in order to extend the battery life of the XR devices.

Existing technologies for AR glasses are often derived from VR headsets, which do not have the same limits in processing powers and battery lives. In some cases, compensation for processing can be provided using off-device rendering, such as when rendering operations are performed by a tethered smartphone or other tethered device, on a server, or in the cloud/server. In order to support off-device rendering, current pose information of AR glasses can be sent to a remote or external rendering entity. Depending on the implementation, pose information can be sent at a relatively high frequency (such as up to 1 KHz or more). The rendering entity uses the latest pose information in order to render the latest media frame. The rendered frame is sent to the AR glasses and corrected using the latest pose information to compensate for the latency between the rendering and the presentation of the frame. One problem with such a simple approach is that the pose information can be redundant, such as when the motion of the AR glasses is minimal and a new rendered frame is unnecessary or when properties of the immersive content allow for re-projection by the AR glasses.

Many current immersive devices also have a number of sensors and solutions that allow for performing operations using six degrees of freedom (DoF) while maintaining a high frame rate. These operations may support head, hand, and eye tracking; full mapping of an environment; artificial intelligence (AI)-based object and face recognition; and body detection. Many of these sensors represent optical-based sensors, which can consume quite a bit of power. These sensors and the processing powers needed to support them place significant loads on the batteries of XR devices, such as wireless AR devices. In addition, running these systems generate significant heat, which in turns requires additional cooling solutions.

In order to support resource optimization for AR glasses and other XR devices, this disclosure introduces specific optimizations for rendering resources and hardware resources. Optimizing rendering resources can include providing pose information delivery configuration modes, frame rendering and delivery conditions and decisions (including the use of re-projection algorithms), and multi-split rendering modes (depending on the device configuration and service). Optimizing hardware resources can include providing operational modes, computer vision system optimizations, and operational mode engine decisions. In some embodiments, techniques for defining and communicating modes of operation for an XR device are provided such that each hardware/software mode can optimize its functionality to allow for efficient operation while still maintaining performance key performance indexes (KPIs) that are expected for the current operational mode. This can include efficient operations related to head poses, hand poses, eye tracking, device tracking, sensor frequency, etc.

As described in more detail below, this disclosure provides procedures and call flows for pose delivery configuration modes, XR device operation procedures for pose triggers and frame recycling (re-projection), and media description properties and metadata that enable pose modes, frame recycling, and multi-split rendering modes. To address hardware resource optimization issues, this disclosure also specifies hardware resource optimization operational modes for different XR use cases, XR device software and hardware stacks for operational mode decisions, and component-based computer vision systems supporting multiple operational modes. This disclosure enables support for pose information delivery configuration modes, conditional and selective frame recycling by an immersive media non-rendering entity, device operation procedures and media description metadata properties, hardware resource optimization operational modes, XR device software and hardware stacks to support operational modes, and multi-component computer vision systems to support operational modes.

FIGURE 1 illustrates an example network configuration 100 including an electronic device in accordance with this disclosure. The embodiment of the network configuration 100 shown in FIGURE 1 is for illustration only. Other embodiments of the network configuration 100 could be used without departing from the scope of this disclosure.

According to embodiments of this disclosure, an electronic device 101 is included in the network configuration 100. The electronic device 101 can include at least one of a bus 110, a processor 120, a memory 130, an input/output (I/O) interface 150, a display 160, a communication interface 170, and a sensor 180. In some embodiments, the electronic device 101 may exclude at least one of these components or may add at least one other component. The bus 110 includes a circuit for connecting the components 120-180 with one another and for transferring communications (such as control messages and/or data) between the components.

The processor 120 includes one or more processing devices, such as one or more microprocessors, microcontrollers, digital signal processors (DSPs), application specific integrated circuits (ASICs), or field programmable gate arrays (FPGAs). In some embodiments, the processor 120 includes one or more of a central processing unit (CPU), an application processor (AP), a communication processor (CP), or a graphics processor unit (GPU). The processor 120 is able to perform control on at least one of the other components of the electronic device 101 and/or perform an operation or data processing relating to communication or other functions. As described below, the processor 120 may be used to perform one or more functions related to deferred rendering of XR content.

The memory 130 can include a volatile and/or non-volatile memory. For example, the memory 130 can store commands or data related to at least one other component of the electronic device 101. According to embodiments of this disclosure, the memory 130 can store software and/or a program 140. The program 140 includes, for example, a kernel 141, middleware 143, an application programming interface (API) 145, and/or an application program (or "application") 147. At least a portion of the kernel 141, middleware 143, or API 145 may be denoted an operating system (OS).

The kernel 141 can control or manage system resources (such as the bus 110, processor 120, or memory 130) used to perform operations or functions implemented in other programs (such as the middleware 143, API 145, or application 147). The kernel 141 provides an interface that allows the middleware 143, the API 145, or the application 147 to access the individual components of the electronic device 101 to control or manage the system resources. The application 147 may include one or more applications that, among other things, perform one or more functions related to deferred rendering of XR content. These functions can be performed by a single application or by multiple applications that each carries out one or more of these functions. The middleware 143 can function as a relay to allow the API 145 or the application 147 to communicate data with the kernel 141, for instance. A plurality of applications 147 can be provided. The middleware 143 is able to control work requests received from the applications 147, such as by allocating the priority of using the system resources of the electronic device 101 (like the bus 110, the processor 120, or the memory 130) to at least one of the plurality of applications 147. The API 145 is an interface allowing the application 147 to control functions provided from the kernel 141 or the middleware 143. For example, the API 145 includes at least one interface or function (such as a command) for filing control, window control, image processing, or text control.

The I/O interface 150 serves as an interface that can, for example, transfer commands or data input from a user or other external devices to other component(s) of the electronic device 101. The I/O interface 150 can also output commands or data received from other component(s) of the electronic device 101 to the user or the other external device.

The display 160 includes, for example, a liquid crystal display (LCD), a light emitting diode (LED) display, an organic light emitting diode (OLED) display, a quantum-dot light emitting diode (QLED) display, a microelectromechanical systems (MEMS) display, or an electronic paper display. The display 160 can also be a depth-aware display, such as a multi-focal display. The display 160 is able to display, for example, various contents (such as text, images, videos, icons, or symbols) to the user. The display 160 can include a touchscreen and may receive, for example, a touch, gesture, proximity, or hovering input using an electronic pen or a body portion of the user.

The communication interface 170, for example, is able to set up communication between the electronic device 101 and an external electronic device (such as a first electronic device 102, a second electronic device 104, or a server 106). For example, the communication interface 170 can be connected with a network 162 or 164 through wireless or wired communication to communicate with the external electronic device. The communication interface 170 can be a wired or wireless transceiver or any other component for transmitting and receiving signals.

The electronic device 101 further includes one or more sensors 180 that can meter a physical quantity or detect an activation state of the electronic device 101 and convert metered or detected information into an electrical signal. For example, one or more sensors 180 can include one or more cameras or other imaging sensors, which may be used to capture images of scenes. The sensor(s) 180 can also include one or more buttons for touch input, one or more microphones, a gesture sensor, a gyroscope or gyro sensor, an air pressure sensor, a magnetic sensor or magnetometer, an acceleration sensor or accelerometer, a grip sensor, a proximity sensor, a color sensor (such as a red-green-blue (RGB) sensor), a bio-physical sensor, a temperature sensor, a humidity sensor, an illumination sensor, an ultraviolet (UV) sensor, an elec-tromyography (EMG) sensor, an electroencephalogram (EEG) sensor, an electrocardiogram (ECG) sensor, an infrared (IR) sensor, an ultrasound sensor, an iris sensor, or a fingerprint sensor. The sensor(s) 180 can further include an inertial measurement unit, which can include one or more accelerometers, gyroscopes, and other components. In addition, the sensor(s) 180 can include a control circuit for controlling at least one of the sensors included here. Any of these sensor(s) 180 can be located within the electronic device 101.

The first external electronic device 102 or the second external electronic device 104 can be a wearable device or an electronic device-mountable wearable device (such as an HMD). When the electronic device 101 is mounted in the electronic device 102 (such as the HMD), the electronic device 101 can communicate with the electronic device 102 through the communication interface 170. The electronic device 101 can be directly connected with the electronic device 102 to communicate with the electronic device 102 without involving with a separate network. The electronic device 101 can also be an augmented reality wearable device, such as eyeglasses, that include one or more cameras.

The wireless communication is able to use at least one of, for example, long term evolution (LTE), long term evolution-advanced (LTE-A), 5th generation wireless system (5G), millimeter-wave or 60 GHz wireless communication, Wireless USB, code division multiple access (CDMA), wideband code division multiple access (WCDMA), universal mobile telecommunication system (UMTS), wireless broadband (WiBro), or global system for mobile communication (GSM), as a cellular communication protocol. The wired connection can include, for example, at least one of a universal serial bus (USB), high definition multimedia interface (HDMI), recommended standard 232 (RS-232), or plain old telephone service (POTS). The network 162 or 164 includes at least one communication network, such as a computer network (like a local area network (LAN) or wide area network (WAN)), Internet, or a telephone network.

The first and second external electronic devices 102 and 104 and the server 106 each can be a device of the same or a different type from the electronic device 101. According to certain embodiments of this disclosure, the server 106 includes a group of one or more servers. Also, according to certain embodiments of this disclosure, all or some of the operations executed on the electronic device 101 can be executed on another or multiple other electronic devices (such as the electronic devices 102 and 104 or server 106). Further, according to certain embodiments of this disclosure, when the electronic device 101 should perform some function or service automatically or at a request, the electronic device 101, instead of executing the function or service on its own or additionally, can request another device (such as electronic devices 102 and 104 or server 106) to perform at least some functions associated therewith. The other electronic device (such as electronic devices 102 and 104 or server 106) is able to execute the requested functions or additional functions and transfer a result of the execution to the electronic device 101. The electronic device 101 can provide a requested function or service by processing the received result as it is or additionally. To that end, a cloud computing, distributed computing, or client-server computing technique may be used, for example. While FIGURE 1 shows that the electronic device 101 includes the communication interface 170 to communicate with the external electronic device 104 or server 106 via the network 162 or 164, the electronic device 101 may be independently operated without a separate communication function according to some embodiments of this disclosure.

The server 106 can include the same or similar components as the electronic device 101 (or a suitable subset thereof). The server 106 can support to drive the electronic device 101 by performing at least one of operations (or functions) implemented on the electronic device 101. For example, the server 106 can include a processing module or processor that may support the processor 120 implemented in the electronic device 101. As described below, the server 106 may be used to perform one or more functions related to deferred rendering of XR content.

Although FIGURE 1 illustrates one example of a network configuration 100 including an electronic device 101, various changes may be made to FIGURE 1. For example, the network configuration 100 could include any number of each component in any suitable arrangement. In general, computing and communication systems come in a wide variety of configurations, and FIGURE 1 does not limit the scope of this disclosure to any particular configuration. Also, while FIGURE 1 illustrates one operational environment in which various features disclosed in this patent document can be used, these features could be used in any other suitable system.

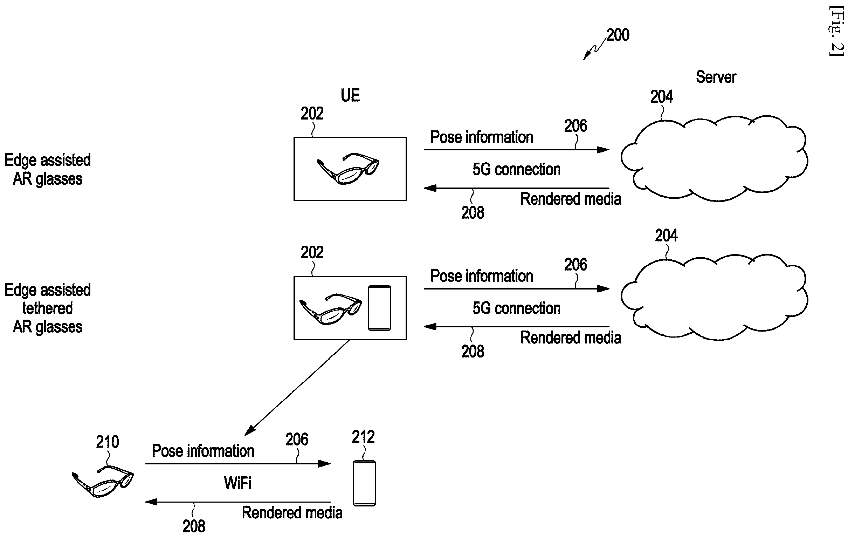

FIGURE 2 illustrates example use cases 200 for XR devices in accordance with this disclosure. In this example, the XR devices are represented by AR glasses, although XR devices of other forms may be used here. As shown in FIGURE 2, user equipment (UE) 202 and a server 204 can exchange pose information 206 and rendered media 208. The UE 202 may represent one or more electronic devices of FIGURE 1, such as the electronic device 101. The server 204 may represent the server 106 of FIGURE 1. In some cases, the UE 202 can include standalone AR glasses 210 that can directly engage in network communications with the server 204. In other cases, the UE 202 can include tethered AR glasses 210 and a separate device containing a network modem enabling suitable connectivity between the AR glasses 210 and the server 204, such as a mobile smartphone or other tethered electronic device 212.

In the standalone configuration, the AR glasses 210 can include a network modem enabling the AR glasses 210 to connect to the server 204 via a network connection without the use of any tethered electronic device 212. In this configuration, pose information 206 is sent from the AR glasses 210 to the server 204 over the network connection. In some cases, the server 204 can use the latest pose information 206 to render immersive 3D media as 2D frames before encoding and sending the 2D rendered frames to the AR glasses 210.

In the tethered configuration, the AR glasses 210 may not contain a network modem and instead may be connected to a tethered electronic device 212, such as via Bluetooth or Wi-Fi. The tethered electronic device 212 contains a network modem enabling the tethered electronic device 212 to connect to the server 204 via a network connection. In this configuration, pose information 206 from the AR glasses 210 is passed to the tethered electronic device 212, which forwards the pose information 206 to the server 204. Also, rendered media 208 from the server 204 is received by the tethered electronic device 212 and forwarded to the AR glasses 210. Here, the tethered electronic device 212 can also be additionally or exclusively used to render immersive media, in which case the pose information 206 from the AR glasses 210 may be sent only to the tethered electronic device 212 and may not be required by or forwarded to the server 204.

Although FIGURE 2 illustrates examples of use cases 200 for XR devices, various changes may be made to FIGURE 2. For example, XR devices may have any other suitable form factors, and tethered XR devices may be used with any other suitable external components. Also, XR devices may be used in any other suitable media rendering process and are not limited to the specific processes described above.

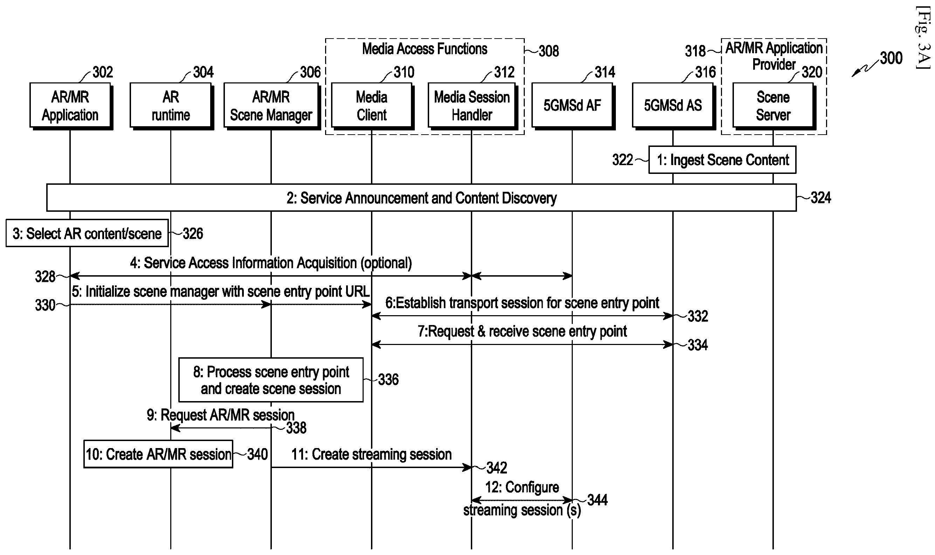

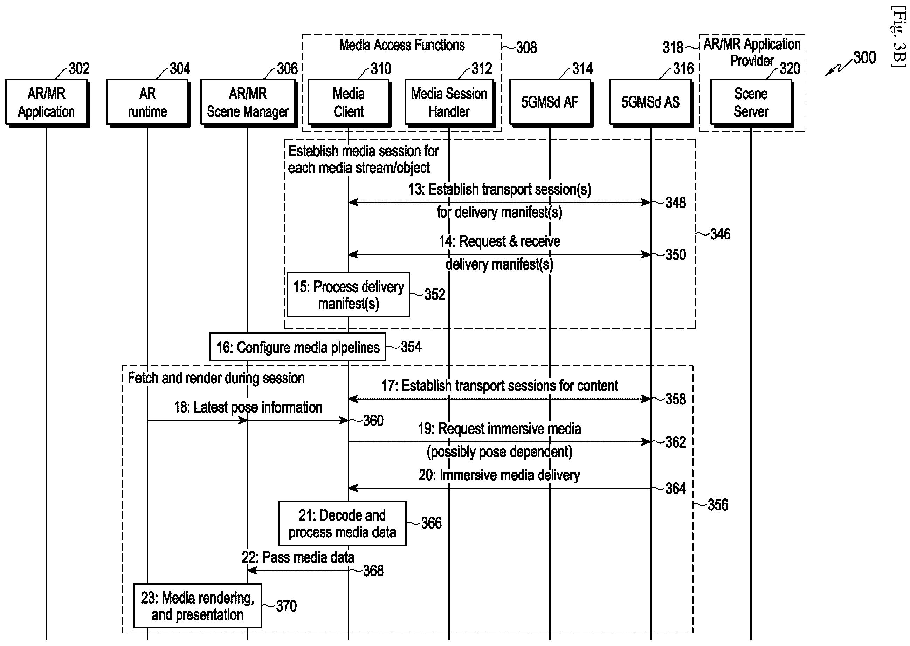

FIGURES 3A and 3B illustrate an example technique 300 for rendering immersive media by an XR device in accordance with this disclosure. The technique 300 may, for example, be performed to provide immersive media to one or more XR devices such as the electronic device 101, which may represent the AR glasses 210. As shown in FIGURES 3A and 3B, a rendering system can include an immersive application 302, an immersive runtime 304, an immersive scene manager 306, media access functions 308 including a media client 310 and a media session handler 312, a network application function (AF) 314, a network application server (AS) 316, and an immersive application provider 318 including a scene server 320. In some cases, the immersive application 302 can represent at least one software application that integrates audiovisual content into a real-world environment. The immersive runtime 304 can represent a set of functions that integrates with a platform to perform common operations, such as accessing controller or peripheral states, getting current and/or predicted tracking positions, performing general spatial computing, and submitting rendered frames to a display processing unit. The scene manager 306 can support immersive rendering and scene graph handling functionalities. The media access functions 308 can represent a set of functions that enable access to media and other immersive content-related data that is used by the immersive scene manager 306 or the immersive runtime 304 in order to provide an immersive experience. The media access functions 308 can be divided into user data for the media client 310 and control data for the media session handler 312. The network AF 314, network AS 316, and immersive application provider 318 can represent components used to provide a 5G Media Downlink Streaming (5GMSd) service in this example, although other services or mechanisms may be used to provide content.

As shown in FIGURE 3A, scene content can be ingested by the network AS 316 in operation 322. A service announcement can be triggered by the immersive application 302 in operation 324. In some embodiments, service access information (including media client entry) or a reference to the service access information can be provided through an M8d interface. Desired immersive media content can be selected by the immersive application 302 in operation 326, and service access information can be acquired or updated in operation 328. The immersive application 302 can initialize the scene manager with an entry point, which can be a scene description, in operation 330. The media client 310 can establish a transport session for receiving the entry point or scene description in operation 332, and the media client can request and receive a full scene description in operation 334. The immersive scene manager 306 can process the entry point or scene description in operation 336. The immersive scene manager 306 can request creation of a new immersive session from the immersive runtime 304 in operation 338, and the immersive runtime 304 can create a new immersive session in operation 340.

Operations 342-356 describe an immersive media delivery pipeline that can be used to receive and render immersive scene and immersive scene updates. Here, the media client 310 and/or the immersive scene manager 306 can provide quality of service (QoS) information to the media session handler 312 in operation 342. The media session handler 312 can share information with the network AF 314, in some cases including desired QoS information, in operation 344. Based on existing provisioning by the immersive application provider 318, the network AF 314 may request QoS modifications to the PDU sessions.

A subprocess 346 can establish transport sessions and can receive and process delivery manifests and includes operations 348-352. For immersive media content, the media client 310 can establish one or more transport sessions to acquire delivery manifest information in operation 348. The media client 310 can request and receive delivery manifests from the network AS 316 in operation 350, and the media client 310 can process the delivery manifests in operation 352. In processing the delivery manifest, the media client 310 can determine a number of needed transport sessions for media acquisition. In some cases, the media client 310 can be expected to be able to use the delivery manifest information to initialize media pipelines for each media stream. The immersive scene manager 306 and media client 310 can configure rendering and delivery media pipelines in operation 354.

A subprocess 356 can provide latest pose information and can request, receive, and render media objects of the immersive scene in operations 358-370. The media client 310 can establish one or more transport sessions to acquire the immersive media content in operation 358. The latest pose information can be acquired by the immersive scene manager 306 and shared to the media client 310 in operation 360, and the media client 310 can request the immersive media data according to the delivery manifest processed in operation 362. The request can include pose information, such as for viewpoint-dependent streaming. The media client 310 can receive the immersive media data and can trigger one or more media rendering pipelines in operation 364. The triggering of the media rendering pipeline(s) can include registration of immersive content accordingly into the real world. The media client 310 can decode and process the media data in operation 366. For encrypted media data, the media client 310 may also perform decryption. The media client 310 can pass the media data to the immersive scene manager 306 in operation 368, and the immersive scene manager 306 can render the media and can pass the rendered media to the immersive runtime 304 in operation 370. The immersive runtime 304 can perform further processing, such as registration of the immersive content into the real world and pose correction.

Although FIGURES 3A and 3B illustrate one example of a technique 300 for rendering immersive media by an XR device, various changes may be made to FIGURES 3A and 3B. For example, while shown as a series of operations, various operations in FIGURES 3A and 3B may overlap, occur in parallel, occur in a different order, or occur any number of times.

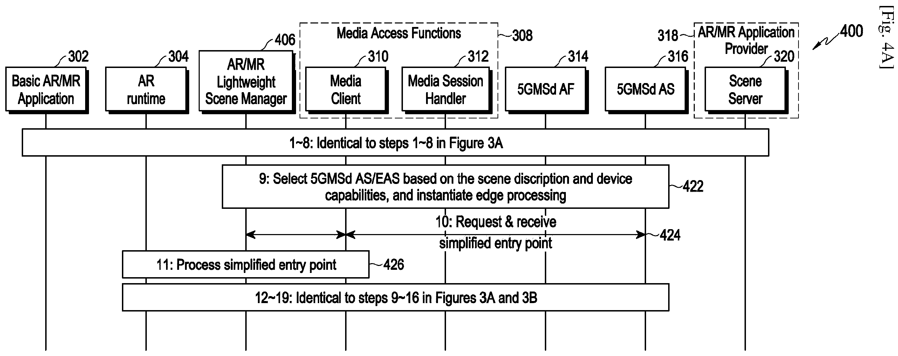

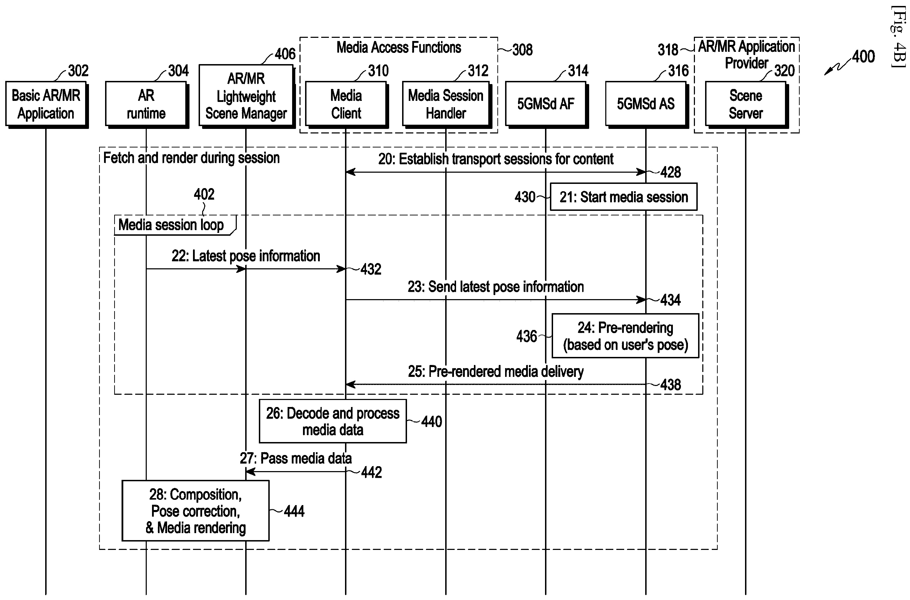

FIGURES 4A and 4B illustrate an example technique 400 for rendering immersive media using server assistance in accordance with this disclosure. As shown in FIGURES 4A and 4B, a rendering system can include many of the same components described above with respect to FIGURES 3A and 3B. Here, however, the immersive scene manager 306 has been replaced by an immersive lightweight scene manager 406. The immersive lightweight scene manager 406 can represent a scene manager that is capable of handling a limited set of immersive media or 3D media. The immersive lightweight scene manager 406 can require some form of pre-rendering by another element, such as an edge server or cloud server.

The technique 400 here can include the same operations 322-336 as described above, which are combined in FIGURES 4A and 4B for simplicity. Based on a processed scene description and device capabilities, the network AS 316 can be selected and edge processes can be instantiated in operation 422. In some cases, the immersive lightweight scene manager 406 can send the scene description and the device capabilities to the network AS 316. The network AS 316 can derive an edge application server (EAS) key performance index (KPI) and can select a new network AS 316 based on the new KPI. The edge processes are started and a new entry point URL can be provided to the immersive lightweight scene manager 406. The immersive lightweight scene manager 406 can derive the EAS KPIs from the scene description and the device capabilities. The immersive lightweight scene manager 406 can also request the network AF 314 to provide a list of suitable network AS 316.

The immersive lightweight scene manager 406 can request a lightweight scene description in operation 424. The edge processes derive the lightweight scene description from a full scene description and can provide the lightweight scene description to the immersive lightweight scene manager 406. The lightweight scene manager 406 can process the simplified entry point or lightweight scene description in operation 426. The operations 338-354 can be performed similarly in FIGURES 4A and 4B as in FIGURES 3A and 3B and are omitted here for simplicity.

The media client 310 can establish one or more transport sessions to acquire the immersive media content in operation 428. The network AS 316 can initiate and start a media session in operation 430, and the media session can include a stateful session loop 402 specific to the UE 202. The stateful session loop 402 can include operations 432-438. The immersive lightweight scene manager 406 can acquire the latest pose information and share the pose information to the media client 310 in operation 432, and the media client 310 can send the latest pose information to the network AS 316 in operation 434. The network AS 316 can perform pre-rendering of the media based on the latest received pose information and any original scene updates in operation 436. The pre-rendering may include decoding and rendering of immersive media and encoding the rendered media. In some embodiments, the rendered media can be rendered 2D media. The network AS 316 can send the pre-rendered media to the media client 310 in operation 438. The pose information can be sent from the UE 202 to the server periodically during the media session loop, regardless of whether the pose information is used instantly or not during the pre-rendering operation. Pre-rendering can also be performed regardless of UE decisions or specific information related to the pose information.

The media client 310 can decode and process the media data in operation 440. For encrypted media data, the media client 310 can perform decryption. The media client 310 can pass the media data to the immersive lightweight scene manager 406 in operation 442. The immersive lightweight scene manager 406 can render the media and can pass the rendered media to the immersive runtime 304 in operation 444. The immersive runtime 304 can perform further processing, such as composition, pose correction, and registration of the immersive content into the real world.

Although FIGURES 4A and 4B illustrate one example of a technique for rendering immersive media using server assistance, various changes may be made to FIGURES 4A and 4B. For example, while shown as a series of operations, various operations in FIGURES 4A and 4B may overlap, occur in parallel, occur in a different order, or occur any number of times.

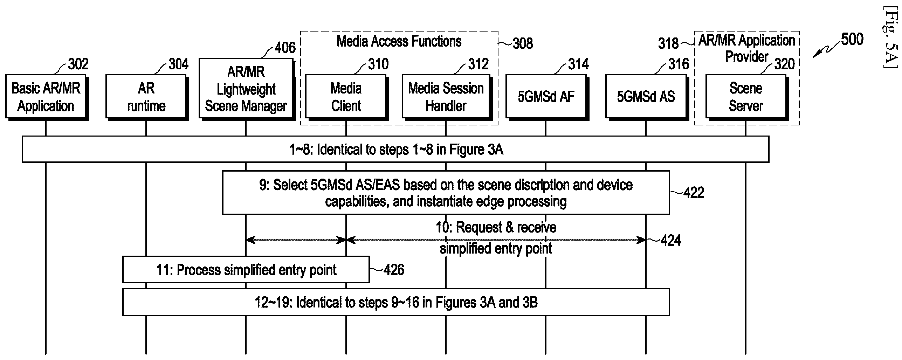

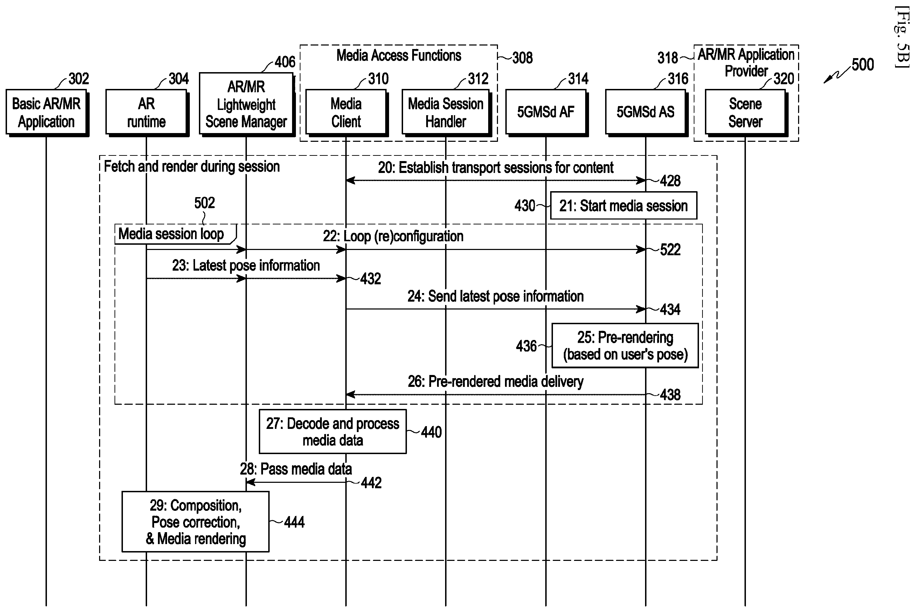

FIGURES 5A and 5B illustrate an example technique 500 for using a media session loop between a UE and a server in accordance with this disclosure. As shown in FIGURES 5A and 5B, a rendering system can include the same components described above with respect to FIGURES 4A and 4B. The technique 500 here can include the same operations 322-336 as described above, which are combined in FIGURES 5A and 5B for simplicity. Additional operations described above for FIGURES 4A and 4B are also included in FIGURES 5A and 5B and not described here. In FIGURES 5A and 5B, a media session loop 502 can include a loop configuration where the immersive runtime 304 configures properties of a newly-created media session loop 502 or loop reconfiguration where the immersive runtime 304 reconfigures properties of the media session loop 502 in operation 522. Examples of properties for the media session loop 502 can include a pose information delivery configuration, a media session loop setting, a frame recycling flag, etc.

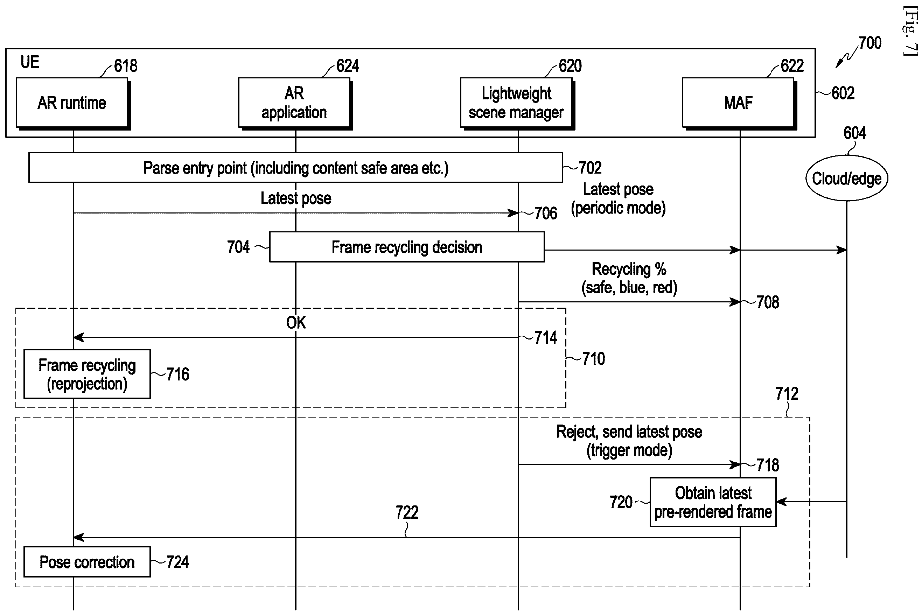

The pose information delivery configuration can include an offline mode, a periodic mode, a trigger mode, etc. The offline mode can cause pose information to not be sent to the server 204. Split-rendering may not be performed or pose information may not be necessary for split-rendering. The periodic mode can cause pose information to be periodically sent from the UE 202 to the rendering entity or server. A frequency of the pose information delivery can be set by the UE 202 through this parameter. The trigger mode can cause pose information to be sent when triggered by the UE 202. Example conditions for triggering delivery of pose information are described in greater detail below with reference to FIGURE 7.

The media session loop setting can be used to control whether the UE 202 sends pose information to the server 204 using any of the pose information delivery configurations and whether the UE 202 receives pre-rendered media from the server 204. The relationship between the receipt of pose information and the rendering of a current frame by a server 204 can be implementation-specific. In some cases, the media session loop setting can include a send pose variable (0,1) to indicate whether to send pose information and a receive media variable (0,1) to indicate whether to receive pre-rendered media from the server 204. The frame recycling flag can indicate that a UE 202 is performing frame recycling.

Although FIGURES 5A and 5B illustrate one example of a technique 500 for using a media session loop between a UE and a server, various changes may be made to FIGURES 5A and 5B. For example, while shown as a series of operations, various operations in FIGURES 5A and 5B may overlap, occur in parallel, occur in a different order, or occur any number of times.

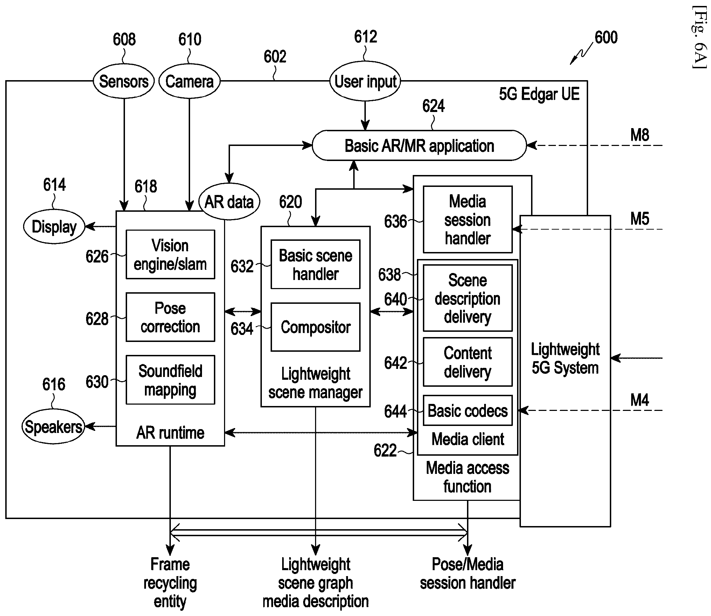

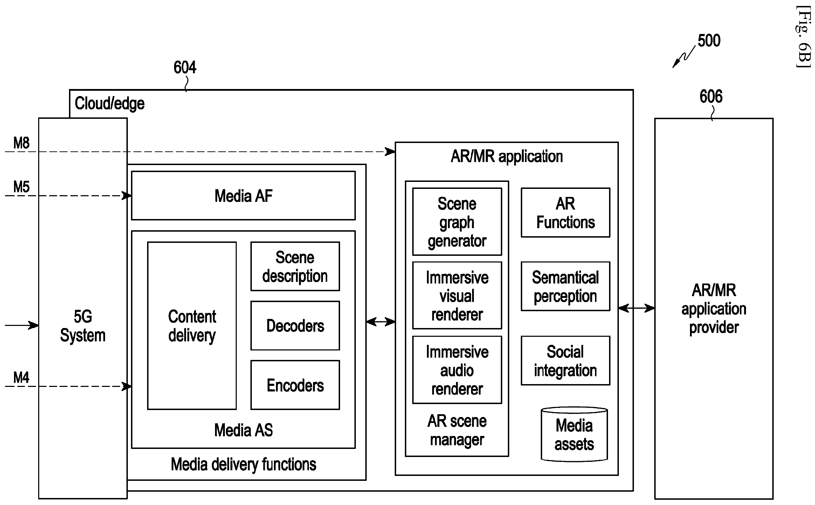

FIGURES 6A and 6B illustrate an example environment 600 for device functions related to pose information delivery configuration in accordance with this disclosure. As shown in FIGURES 6A and 6B, the environment 600 can include a UE 602, a cloud/edge server 604, and an immersive application provider 606. The UE 602 may represent the electronic device 101, which may represent the AR glasses 210 or UE 202 described above. The cloud/edge server 604 may represent the server 106, 204 described above. The immersive application provider 606 may represent the immersive application provider 318 described above. The UE 602 can include hardware, such as one or more sensors 608, one or more cameras 610, one or more user inputs 612, at least one display 614, and one or more speakers 616. The UE 602 can also include software, such as immersive runtime 618, lightweight scene manager 620, media access functions 622, and an immersive application 624. These functions may represent the corresponding functions in FIGURES 3A through 5 described above. The UE 602 can include 5G connectivity or other network connectivity provided through an embedded 5G modem and other 5G system components or other networking components.

In this example, the immersive runtime 618 is local to the UE 602 and uses data from the sensors 608 and other components, such as audio inputs and video inputs. The immersive runtime 618 may be assisted by a cloud/edge application for spatial localization and mapping provided by a spatial computing service. The immersive runtime 618 can control tracking and sensing functions and capturing functions in addition to immersive runtime functions. The tracking and sensing functions can include inside-out tracking for six DoF user position, eye tracking, and hand tracking, such as by using the sensors 608 and cameras 610. The capturing functions can include vision camera functions for capturing a surrounding environment for vision-related functions and media camera functions for capturing scenes of objects for media data generation. The vision and media camera functions may be mapped to the same camera 610 or separate cameras 610. In some embodiments, at least one external camera 610 can be implemented on one or more other electronic devices tethered to the UE 602 or can exist as at least one stand-alone device connected to the UE 602.

Functions of the immersive runtime 618 can include vision engine/simultaneous localization and mapping (SLAM) functions 626, pose correction functions 628, sound field mapping functions 630, etc. The vision engine/SLAM functions 626 can represent functions that process data from the sensors 608 and cameras 610 to generate information about a surrounding environment of the UE 602. The vision engine/SLAM functions 626 can include functions for spatial mapping to create a map of a surrounding area, localization to establish a position of a user and objects with the surrounding area, reconstructions, semantic perception, etc. The sensors 608 can include microphones for capturing audio sources including environmental audio source and user audio. The pose correction functions 628 can represent functions for pose correction that stabilize immersive media when a user moves. In some cases, the stabilization can be performed using asynchronous time warping (ATW) or late stage re-projection (LSR). The sound field mapping functions 630 can convert signals captured by the UE 602 into semantical concepts, such as by using artificial intelligence (AI) or machine learning (ML). Specific examples here can include object recognition and object classification.

The lightweight scene manager 620 can be local to the immersive device but main scene management and composition may be performed on the could/edge server 604. The lightweight scene manager 620 can include a basic scene handler 632 and a compositor 634. The basic scene handler 632 can represent functions that support management of a scene graph, which represents an object-based hierarchy for a geometry of a scene and can regulate interaction with the scene. The compositor 634 can represent functions for compositing layers of images at different levels of depth for presentation. In some embodiments, the lightweight scene manager 620 can also include immersive media rendering functions. The immersive media rendering functions can include generation of monoscopic display or stereoscopic display eye buffers from visual content using GPUs. Rendering operations may be different depending on a rendering pipeline of the immersive media. The rendering operations may include 2D or 3D visual/audio rendering, as well as pose correction functionalities. The rendering operations may also include audio rendering and haptic rendering.

The media access functions 622 can include tethering and network interfaces for immersive content delivery. For example, AR glasses 210 or other XR device can be tethered through non-5G connectivity, 5G connectivity, and a combination of non-5G and 5G connectivity. The media access functions 622 can include a media session handler 636 and a media client 638. These functions may represent the corresponding functions in FIGURES 3A through 5 described above. The media session handler 636 can include services on the UE 602 that connect to system network functions in order to support media delivery and QoS requirement for media delivery.

The media client 638 can include scene description delivery functions 640, content delivery functions 642, and basic codec functions 644. The scene description delivery functions 640 can provide digital representations and delivery of scene graphs and XR spatial descriptions. The content delivery functions 642 can include connectivity and protocol frameworks to deliver immersive media content and provide functionality, such as synchronization, encapsulation, loss and jitter management, bandwidth management, etc. The basic codec functions 644 can include one or more codecs to compress the immersive media provided in a scene. The basic codec functions 644 can include 2D media codecs, immersive media decoders (to decode immersive media as inputs to an immersive media renderer and may include both 2D and 3D visual/audio media decoder functionalities), and immersive media encoders for providing compressed versions of visual/audio immersive media data.

In some embodiments, the display 614 can include an optical see-through display to allow the user to see the real world directly through a set of optical elements. For example, AR and MR displays can add virtual content by displaying additional light on the optical elements on top of the light received from the real world. The speakers 616 can allow rendering of audio content to enhance the immersive experience. The immersive application 624 can make use of XR functionalities on the UE 602 and the network to provide an immersive user experience.

The immersive runtime 618 can perform frame recycling for immersive media processing. Frame recycling can involve using a previously-rendered frame to estimate or produce a subsequent frame for rendering, such as by using techniques such as late stage re-projection (LSR). Several factors may be considered for enabling frame recycling, which can include determining differences between adjacent frames based on pose information for motion of a user. Also, some immersive contents consumed by the UE 602 may contain scene properties that allow for frame recycling. Frame recycling can be considered when a difference between adjacent frames is sufficiently small that re-projection techniques do not result in occlusion holes and do not generate significant artifacts in the next frame produced by frame recycling. Scene properties can include static scene volume, scene camera safe volumes, or object safe boundaries. Depending on immersive services and use cases, the UE 602 can determine which of the lightweight scene manager 620 and the immersive application 624 can perform the frame recycling decision.

Although FIGURES 6A and 6B illustrate one example of an environment 600 for device functions related to pose information delivery configuration, various changes may be made to FIGURES 6A and 6B. For example, the number and placement of various components of the environment 600 can vary as needed or desired. Also, the environment 600 may be used in any other suitable media rendering process and is not limited to the specific processes described above.

FIGURE 7 illustrates an example technique 700 for pose information delivery configuration and frame recycling decisions by a UE in accordance with this disclosure. The technique 700 may, for example, be used by any of the user equipment described above, such as the electronic device 101, which may represent the AR glasses 210 or UE 202 or 602. In the following discussion, it is assumed that the UE 602 is used, although any other suitable user equipment may be used here.

As shown in FIGURE 7, the technique 700 includes operations for pose information delivery confirmation 702 and frame recycling decisions 704. The pose information delivery confirmation 702 is performed when the trigger mode is activated in order to confirm a pose trigger. For example, at a beginning of an immersive service, the UE 602 can receive an entry point for immersive contents. The entry point can be a scene description, such as a glTF file or any kind of manifest, that contains content information. The content information may describe a location of immersive content for accessing by the media access functions 622 and metadata describing properties of the content, such as one or more objects in a scene. The metadata can include static scene volume descriptions, scene camera safe volume descriptions, per-object safe boundary descriptions, etc. At the pose information delivery confirmation 702, different modes for pose information delivery confirmation can be configured depending on a service use case.

One example of a syntax for static scene volume description metadata that describes possible static volumes within a scene of immersive contents is shown below.

```
class StaticSceneSampleEntry(type) extends MetaDataSampleEntry(type) {
StaticSceneConfigBox(); // mandatory
Box[] other_boxes; // optional
}
class StaticSceneConfigBox extends FullBox('stat', 0, 0) {
bit(6) reserved = 0;
unsigned int(1) dynamic_scene_range_flag;
unsigned int(1) dynamic_safe_range_flag;
unsigned int(8) num_volumes;
if(dynamic_scene_range_flag == 0) {
```

```
unsigned int(32) x_range;
unsigned int(32) y_range;
unsigned int(32) z_range;
}
if(dynamic_safe_range_flag == 0) { unsigned int(32) radius;
}
}
aligned(8) StaticSceneSample() {
for(i = 0; i < num_volumes; i++)
SceneRegionStruct(dynamic_scene_range_flag, dynamic_safe_range_flag);
unsigned int(32) sample_persistence;
}
aligned(8) SceneRegionStruct(scene_range_included_flag,
safe_range_included_flag) {
signed int(32) centre_x;
signed int(32) centre_y;
signed int(32) centre_z;
if (scene_range_included_flag) {
unsigned int(32) x_range;
unsigned int(32) y_range;
unsigned int(32) z_range;
}
if (safe_range_included_flag) {
unsigned int(32) radius;
}
}
```

Here, StaticSceneSampleEntry represents static metadata or metadata that can change non-frequently, which is defined in the sample entry of the timed metadata track. Also, StaticSceneSample can define the metadata that exists inside each timed metadata sample and may change per sample or frame. A location of each static scene volume can be changed per sample or frame and is described by centre_x, centre_y, and centre_z. When dynamic_scene_range_flag and dynamic_safe_range_flag are set to one, a size of the static scene volume and the safe range, respectively, may change over time. The value of dynamic_scene_range_flag is set to zero or one to indicate whether a size of static scene volumes in the content does not change with time. The value of dynamic_safe_range_flag is set to zero or one to indicate whether a size of safe range volumes in the content changes with time. The value of num_volumes can indicate a number of static scene volumes in the content. The values of x_range, y_range, and z_range each define a distance in a respective direction of the x, y, and z axes of the scene volume where contents are static. The value of radius defines a safe range in or around a static scene range. The value of sample_persistence defines a number of samples after a current sample for which syntax values defined in StaticSceneSample are applicable. The values of centre_x, centre_y, and centre_z define a center of a static scene volume in each of the x, y, and z axes directions from an origin defined by the scene description for the content.

In some embodiments, the scene safe volume paths description may be provided as an extension on the camera elements in the glTF file. Bounding volumes may each define a camera path within a scene that allows for frame recycling, indicates that mesh objects viewed along a path are static, and indicates that rendered frames can be recycled. Examples of syntax and semantics for scene safe volume paths description metadata are shown below in Table 1.

<Table 1>

| Name | Type | Default | Description |
|------|------|---------|-------------|
| objects | number | N/A | Number of mesh objects in safe volume paths. |
| segments | number | N/A | Number of path segments in safe volume paths. |
| boundingVolume | number | BV_NONE | Type of bounding volume for scene safe volume path segments. When a user/device is located within a bounding volume, frame recycling may be performed. Possible types could include:<br>• BV_NONE: no bounding volume<br>• BV_CONE: a capped cone bounding volume defined by a circle at each anchor point<br>• BV_CUBOID: a cuboid bounding volume defined by size_x, size_y, and size_z for each of two faces containing two anchor points<br>• BV_SPHEROID: a spherical bounding volume around each point along a path segment, where the bounding volume is defined by a radius of the sphere in each dimension (radius_x, radius_y, and radius z). |
| anchorFrame | boolean | false | When set to true, this indicates that frame recycling within a safe volume path may require a re-projection anchor frame. |
| accessor | number | N/A | Index of an accessor or timed accessor that provides scene safe volume information. |

In some embodiments, per-object safe boundary description metadata may be provided as an extension defined on mesh objects in a glTF file or other file for each mesh object. Examples of syntax and semantics for per-object safe boundary description metadata are shown below in Table 2.

<Table 2>

| Name | Type | Default | Description |
|------|------|---------|-------------|
| safeBoundary | number | N/A | Radius of a spherical safe boundary surrounding a mesh object. When a user viewpoint is located outside of this sphere, frame recycling for the mesh object may be possible. |
| safeAngle | number | N/A | Maximum angle of movement feasible for frame recycling of a mesh object when a user viewpoint is located outside of the sphere defined by safeBoundary. |

The immersive runtime 618 can send latest pose information 706 to the lightweight scene manager 620. If the pose information delivery configuration is set to periodic mode, the lightweight scene manager 620 can send the pose information 706 to the media access function 622, which forwards the pose information to the cloud/edge server 604. The frequency of sending the pose information 706 between the UE 602 and the cloud/edge server 604 or between the lightweight scene manager 620 and the media access function 622 can be dependent on the configuration indicated by the periodic mode parameter, which may be different than a frequency between the immersive runtime 618 and the lightweight scene manager 620. After the pose information 706 is updated, the immersive application 624 or the lightweight scene manager 620 can perform the frame recycling decision 704. In some cases, the frame recycling decision 704 can be performed based on content-related metadata parsed by the lightweight scene manager 620 and device-related factors, such as device status, operational modes, or other hardware-related factors provided by the immersive application 624.

Depending on the service and application, a detailed report 708 of the frame recycling decision 704 can be provided from the lightweight scene manager 620 and/or the immersive application 624 to the media access function 622. The detailed report 708 can be forwarded from the media access function 622 to the cloud/edge server 604. The detailed report 708 can include results and factors of the frame recycling decisions 704. When the detailed report 708 indicates that frame recycling is performed for a next frame, the cloud/edge server 604 does not need to send a processed next frame. The detailed report 708 can also include an estimated probability or classification for whether frame recycling may be possible for other future frames. In some cases, the estimated probability or classification can depend on pose motion vectors and location with a scene for the UE 602, where the pose motion vectors and locations with the scene can be based on the content metadata available in the entry point.

As a result of the frame recycling decision 704, the UE 602 can proceed with a first option 710 when deciding to frame recycle and a second option 712 when deciding not to frame recycle. The first option 710 can be performed based on the immersive application 624 and/or lightweight scene manager 620 deciding that frame recycling can be performed in the frame recycling decision 704. The first option 710 includes operations 714 and 716. The immersive application 624 and the lightweight scene manager 620 can send a notification to the immersive runtime 618 in operation 714. The notification can include any information to indicate the frame to be recycled as the next frame. On receiving the notification for frame recycling, the immersive runtime 618 can reuse a previous frame or frames in order to create a next frame or frames for rendering in operation 716. In some cases, the recycled frame or frames can be determined based on an implemented algorithm discussed in this disclosure. An example implementation can include a late-stage re-projection or other re-projection algorithm that may use additional media related information, such as depth information.

The second option 712 can be performed based on the immersive application 624 and/or lightweight scene manager 620 deciding that frame recycling cannot be performed in the frame recycling decision 704. The second option 712 includes operations 718-724. The lightweight scene manager 620 can send the latest pose to the cloud/edge server 604 via the media access function 622 in operation 718. In some cases, the transmission of pose information can be based on the pose delivery mode, such as in trigger mode. The cloud/edge server 604 can use the pose information during remote pre-rendering. Once the pre-rendering is completed in the cloud/edge server 604, the pre-rendered frame is compressed or encoded and sent to the UE 602. The pre-rendered frame is received and decoded by the media access function 622 in operation 720. The media access function 622 passes the pre-rendered frame to the immersive runtime 618 in operation 722, and the immersive runtime can perform pose correction on the frame based on the latest pose information to compensate for any motion due to photon latencies in operation 724.

Although FIGURE 7 illustrates one example of a technique 700 for pose information delivery configuration and frame recycling decisions by a UE, various changes may be made to FIGURE 7. For example, while shown as a series of operations, various operations in FIGURE 7 may overlap, occur in parallel, occur in a different order, or occur any number of times.

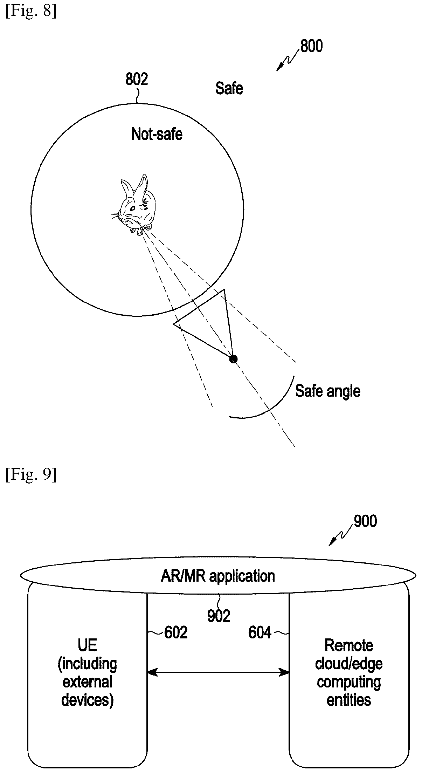

FIGURE 8 illustrates an example graphical representation 800 of object safe boundary description metadata in accordance with this disclosure. The object safe boundary description metadata may be used as described above. As shown in FIGURE 8, a safe boundary 802 can be identified for each object, such as through the per-object safe boundary description metadata from Table 2. Areas marked as "not safe" indicate areas where frame recycling is not feasible, and areas marked as "safe" indicate areas where frame recycling may be feasible. Each object can have different "safe" and "not safe" areas. To determine a safe area, the per-object safe boundary description metadata can be reviewed for each object in the scene.

Although FIGURE 8 illustrates one example of a graphical representation 800 of object safe boundary description metadata, various changes may be made to FIGURE 8. For example, the object safe boundary description may have any other suitable size and shape.

FIGURE 9 illustrates an example system 900 for efficiently communicating with a remote computing system and an immersive device in accordance with this disclosure. As shown in FIGURE 9, a rendering system 900 can include the UE 602, the cloud/ edge server 604, and an immersive application 902 (which may represent the immersive application 302 or 624 described above). With a variety of different use cases and scenarios possible, the rendering system 900 can determine which component to run for a use case employed at the time. However, an immersive device, the cloud/edge server 604, and the UE 602 may not know the use case. Furthermore, not all compute devices and UEs are the same, so simply saying whether to turn off or turn on a particular sensor or service may not be practicable.

The rendering system 900 can determine efficient communication with both the remote cloud/edge server 604 and the UE 602 and classes of services used for the most-optimal way to support a use case class. The rendering system 900 is extensible enough to allow almost any remote components, including tethered devices or cloud-based devices, to work with almost any immersive device. The UE 602, the cloud/edge server 604, and immersive application 902 can work together in a specified configuration, which can be called an "operational mode." Example operational modes are shown in Table 3.

<Table 3>

| Mode 1 | HUD | While in head's up display (HUD) mode, the device may not perform tracking (with the possible exception of simple hand gestures). |
|---|---|---|
| Mode 2 | 2D | Display 2D applications and desktop. |
| Mode 3 | Media | Can be mono or stereo (in some cases, media mode can be reserved for displaying pre-recorded moving media). |
| Mode 4 | Desktop AR | Desktop AR mode can be designated for 3D world-locked experience, where a targeted area is limited in size (this mode may also support 3D avatars and volumetric video). |

(continued)

| Mode 5 | Room MR | Room-scale MR can support full comprehension and tracking, with a maximum distance of $N$ meters. |
|---|---|---|
| Mode 6 | Area MR | Large-room scale MR can support full comprehension and tracking, with a maximum distance of $M$ meters (where $M > N$). |
| Mode 7 | Outside MR | Outdoor MR support |

These modes are defined based on the general goal of the immersive use case/ scenario such that each component of the immersive solution is optimized for power while still ensuring the KPI(s) for each use case is/are satisfied. For example, if an application is calling for a simple HUD-like display, HMD camera tracking systems and hand-tracking algorithms can be disabled, and image transfer resolution and color depth can be lowered. Note, however, that embodiments of this disclosure are not limited to the specific operational modes in Table 3.

In some cases, operational modes can be dynamic and can be changed by systems subscribing to state information. Read and write permissions for the operational modes can be managed by a developer. Each system subscribed to the operational modes can have a listener to check for operational mode changes. For example, an HMD optical tracking system may lose six DoF tracking due to poor conditions and revert to three DoF tracking. The HMD service that is subscribed to an operational mode can change the capabilities from an operational mode that supports six DoF head tracking to an operational mode that supports three DoF head tracking. Each operational mode may have a minimum KPI. For example, "mode 4" in Table 3 may require a certain level of accuracy for detecting surfaces. If the rendering system 900 cannot meet this KPI, the rendering system 900 may be prevented from operating in mode 4.

Although FIGURE 9 illustrates one example of a system 900 for efficiently communicating with a remote computing system and an immersive device, various changes may be made to FIGURE 9. For example, the number and placement of various components of the system 900 can vary as needed or desired. Also, the system 900 may be used in any other suitable media rendering process and is not limited to the specific processes described above.

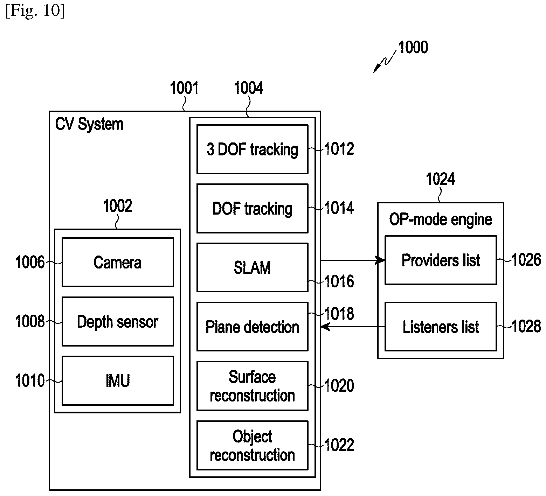

FIGURE 10 illustrates an example comprehensive computer vision system 1000 in accordance with this disclosure. The computer vision system 1000 may, for example, be used by any of the user equipment described above, such as the electronic device 101, which may represent the AR glasses 210 or UE 202 or 602. As shown in FIGURE 10, the comprehensive computer vision system 1000 includes a computer vision (CV) system 1001. The CV system 1001 can include sensing units 1002 and software modules 1004 to provide various levels of tracking and scene comprehension capabilities. The sensing units 1002 can include a camera 1006, a depth sensor 1008, and an IMU 1010. These sensing units 1002 may, for instance, represent different sensors 180 of the electronic device 101. The software modules 1004 can include a three DoF tracking function 1012, a DOF tracking function 1014, a SLAM function 1016, a plane detection function 1018, a surface reconstruction function 1020, and an object reconstruction function 1022. The CV system 1001 can register with an operational mode engine 1024, which uses an operational mode provider list 1026 that supports various modes of operation. The CV system 1001 can also register itself in a listener list 1028 for operational mode changes.

When the operational mode engine 1024 decides that a current operational mode (such as Room MR mode in Table 3) uses full comprehension and tracking, the CV system 1001 can turn on all sensing units 1002 to enable the software modules 1004 to perform the necessary functions. When the operational mode engine 1024 decides to change to another operational mode (such as Desktop AR in Table 3) that does not use full comprehension and tracking, the CV system 1001 can turn off the camera 1006 and the depth sensor 1008 but keep the IMU 1010 running to provide three DoF tracking capability, which can be adequate for this operational mode. Various modifications to the sensing units 1002 and software modules 1004 used in each operational mode can be made in order to support proper execution in each operational mode.

Although FIGURE 10 illustrates one example of a comprehensive computer vision system 1000, various changes may be made to FIGURE 10. For example, the number and placement of various components of the comprehensive computer vision system 1000 can vary as needed or desired. Also, the comprehensive computer vision system 1000 may be used in any other suitable media rendering process and is not limited to the specific processes described above.

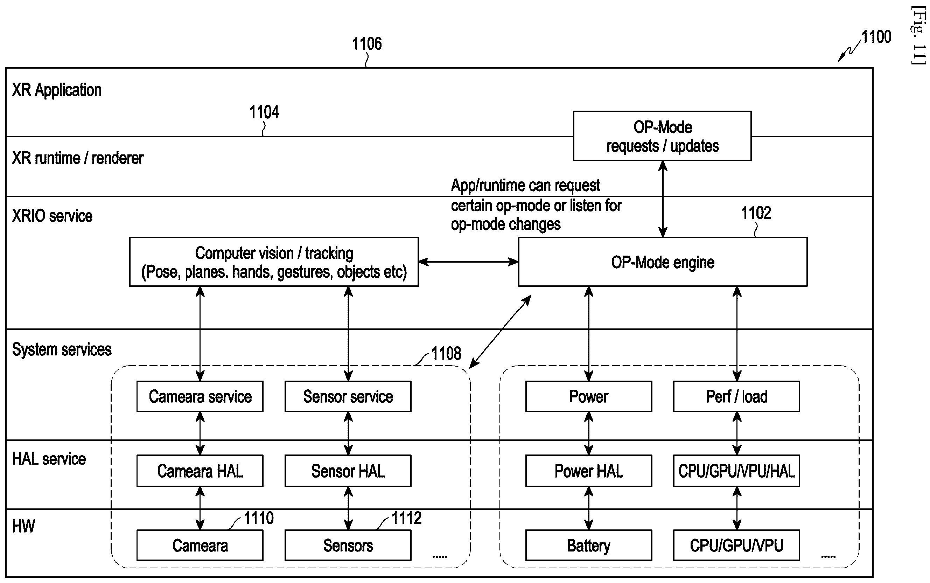

FIGURE 11 illustrates an example software stack 1100 for an immersive device in accordance with this disclosure. The software stack 1100 may, for example, be used by any of the user equipment described above, such as the electronic device 101, which may represent the AR glasses 210 or UE 202 or 602. As shown in FIGURE 11, an operational mode engine 1102 is part of an XRIO service, although other services may also be supported. The operational mode engine 1102 is responsible for moving immersive data to an immersive runtime/renderer 1104. The operational mode engine 1102 is the central decision-making entity that controls what operational mode the system functions in at any given time. For example, the operational mode engine 1102 can take requests from an immersive application 1106 or the immersive runtime/ renderer 1104 to set particular operational modes of the system if possible. As a particular example, a media app can request a specific operational mode and (if system conditions permit) the operational mode engine 1102 can set the mode for the system 1100.

The operational mode engine 1102 is also responsible for setting appropriate operational modes of the system 1100 based on the performance/system load and available power (such as battery level). The operational mode engine 1102 further publishes a set operational mode to the immersive runtime/renderer 1104 and the immersive application 1106 so that the immersive application 1106 can adjust the user's experience accordingly. For example, if the immersive application 1106 is requesting operational mode 7 (Outdoor MR) but the current system state is running under critical battery or high load (low performance), the operational mode engine 1102 can decide to only support up to mode 5 (Room AR) based on the system conditions. The decision by the operational mode engine 1102 can be communicated to the immersive application 1106 and immersive runtime/renderer 1104, which can adjust the user experience accordingly and inform the user.

The operational mode engine 1102 can be aware of what hardware modules 1108 and/or functions are available on any given system and can control power for certain hardware modules. For example, if the immersive application 1106 has requested "mode 1" (HUD), the operational mode engine 1102 can ensure that all unused hardware modules 1108 (such as cameras 1110, sensors 1112, etc.) are turned off to save power. The sensors can include one or more depth sensors, one or more inertial measurement unit (IMU) sensors, one or more gyroscopic sensors, one or more accelerometers, one or more magnetometers, etc. The operational mode engine 1102 can also inform the immersive application 1106 whether certain operational modes are not available based on a particular hardware 1108. As a non-limiting example, the operational mode can be determined based on an availability of at least one camera, at least one depth sensor, and at least one IMU. Table 4 shows example ways in which hardware resource optimization can be used to define possible pose information delivery configuration modes.

<Table 4>

|        |             |                                                                                                                                                                | Pose Mode |
|--------|-------------|----------------------------------------------------------------------------------------------------------------------------------------------------------------|-----------|
| Mode 1 | HUD         | While in HUD mode, the device may not perform tracking (with the possible exception of simple hand gestures).                                                   | Off       |
| Mode 2 | 2D          | Display 2D applications and desktop.                                                                                                                            | Off       |
| Mode 3 | Media       | Can be mono or stereo (in some cases, media mode can be reserved for displaying pre-recorded moving media).                                                     | Off       |
| Mode 4 | Desktop AR  | Desktop AR mode can be designated for 3D world-locked experience, where a targeted area is limited in size (this mode may also support 3D avatars and volumetric video). | Off/Trigger |
| Mode 5 | Room MR     | Room-scale MR can support full comprehension and tracking, with a maximum distance of N meters.                                                                 | Trigger/ Periodic |
| Mode 6 | Area MR     | Large-room scale MR can support full comprehension and tracking, with a maximum distance of M meters (where M > N).                                             | Periodic  |
| Mode 7 | Outside MR  | Outdoor MR support                                                                                                                                              | Periodic  |

Although FIGURE 11 illustrates one example of a software stack 1100 for an immersive device, various changes may be made to FIGURE 11. For example, the number and placement of various components of the software stack 1100 can vary as needed or desired. Also, the software stack 1100 may be used in any other suitable media rendering process and is not limited to the specific processes described above.

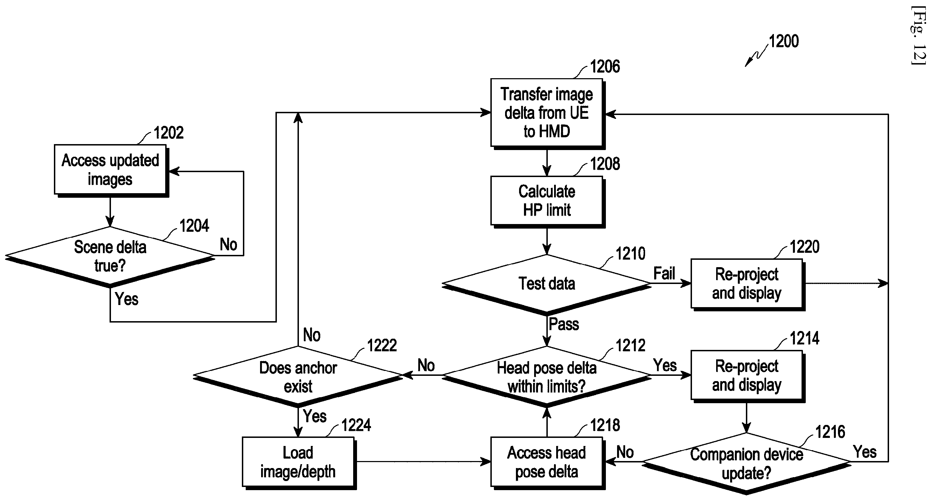

FIGURE 12 illustrates an example method 1200 for deferred rendering on an immersive device that is tethered to an electronic device in accordance with this disclosure. For ease of explanation, the method 1200 of FIGURE 12 is described as being performed using the AR glasses 210 and the tethered electronic device 212 of FIGURE 2. However, the method 1200 may be used with any other suitable electronic device(s) and in any other suitable system(s).

As shown in FIGURE 12, the tethered electronic device 212 can access updated images at step 1202. In some cases, the updated images may include renders of red, green, and blue (RGB) frames and depth frames using a last known head pose. Head-locked images can be treated separately. In some embodiments, the head pose is not updated unless triggered by the AR glasses 210, and an update of head pose can start a new rendering process. The tethered electronic device 212 determines whether a scene delta is set or equal to true at step 1204. The scene delta indicates that image content has changed in a scene (such as by at least a specified amount or percentage). When no content or little content has changed in the scene, the tethered electronic device 212 can pause for a preset time (such as about 16 ms or other time) and call for a new render after the pause. If adequate content has change in the scene, the tethered electronic device 212 transfers an image delta to the AR glasses 210 at step 1206. The image delta can indicate changes between adjacent frames. The tethered electronic device 212 can also transfer one or more new frames to the AR glasses 210. For example, a listener can be invoked to check for new frames from the tethered electronic device 212. If a request for a new frame is made, the most recent head pose can be sent to the tethered electronic device 212.

The AR glasses 210 can calculate a head pose limit at step 1208. For example, the AR glasses 210 can calculate a range of motion that is considered "safe" for reusing a previously-rendered frame. The range of motion may be calculated based on an amount of head pose (HP) translation and head pose rotation that can support a desired image quality based purely on image re-projection. One example calculation could be performed as follows.

$$\text{Headpose\_rotation\_delta (deg)} = \text{FOV (deg) of rendering camera} / 1+(\text{preset/distance (m) from POV}).$$

The AR glasses 210 perform one or more tests on RGB and depth data at step 1210. The tests can include determining whether content is within range limits, depth density is at a preset level, near/far content depth is within limits, content depth continuity is within limits, etc. For the content depth continuity, the AR glasses 210 can check if changes from depth point to adjacent depth points are not beyond a preset ratio. For example, if an average depth difference between a test depth point and the eight adjacent depth points are above set limits, an exception can be called. In some cases, the AR glasses 210 can continue the process even if one or more tests fail to be within preset limits. Thus, if at least one of the tests is determined to fail, the process continues to step 1220.

Based on a current head pose, the AR glasses 210 can determine whether a head pose is within a range relative to a head posed used to calculate a head pose range at step 1212. If not, the AR glasses 210 can perform re-projection and display functions at step 1214. If sprite animations exist, the AR glasses 210 can update image data and depth data. The AR glasses 210 can determine whether one or more new frames are available at step 1216. When one or more new frames are available, the AR glasses 210 can load the new frame(s) and perform step 1206. A time/frame limit can be used here to request new frames regardless of the whether new frames are available. The AR glasses 210 can access head pose delta information at step 1218. The head pose delta can be determined by comparing information from one or more sensors at times of adjacent frames. When the user's head does not move between the times of adjacent frames, the head pose delta is zero. In some cases, the head pose delta can be defined based on either three or six DoF based on the operational mode, and the head pose delta can have a value that combines each of the DoF or a value for each DoF. The combined value for head pose delta can be used to determine whether an aggregate movement is within a threshold, and individual values for individual DoFs can be used to determine whether a single DoF exceeds a threshold. The threshold can be different for the combined value and the individual values, and the individual thresholds can be different for different DoFs.

The AR glasses 210 can perform re-projection and display functions at step 1220. When the data fails the tests in operation 1210, the AR glasses 210 can automatically request a new frame by checking for a companion device update in operation 1216. Failing the tests can indicate that head pose data should be triggered for sending to the tethered electronic device 212. The AR glasses 210 can determine whether an anchor exists at a position and where content has not been updated based on the head pose at step 1222. For example, for each head pose and associated image and depth data set, an anchor or anchor view can be stored. An anchor or anchor view is a view that can be reprojected or adjusted from when a difference between a current head pose and a head pose corresponding to the anchor or anchor view is within one or more movement thresholds. A set of anchor views can be created to allow a user to have a large range of motion without calling for an updated frame from the server or rendering system. When an anchor does not exist corresponding to the head pose exceeding a threshold, the AR glasses 210 can request a new frame from the tethered electronic device 212. The AR glasses 210 can load image and depth delta and update a sprint frame at step 1224. The image and depth data can be used when an anchor point exists corresponding to the latest head pose. Image data and depth data can be loaded from the anchor or anchor view corresponding to the associated head pose. In other words, an anchor view corresponding to a head pose that exceeds the thresholds for movement from a previous head pose can be used for re-projecting and displaying in operation 1214.

Although FIGURE 12 illustrates one example of a method 1200 for deferred rendering on an XR device, various changes may be made to FIGURE 12. For example, while shown as a series of steps, various steps in FIGURE 12 may overlap, occur in parallel, occur in a different order, or occur any number of times.

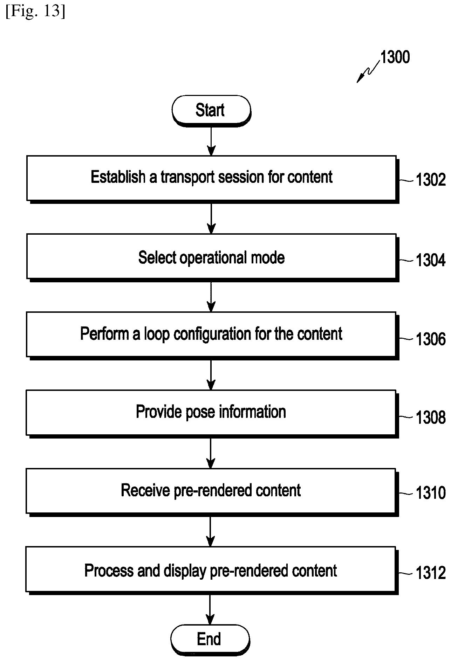

FIGURE 13 illustrates another example method 1300 for deferred rendering on an XR device in accordance with this disclosure. For ease of explanation, the method 1300 of FIGURE 13 is described as being performed using the electronic device 101 of FIGURE 1. However, the method 1300 may be used with any other suitable electronic device(s) and in any other suitable system(s).

As shown in FIGURE 13, the electronic device 101 establishes a transport session for content on the XR device with a server 106 at step 1302. Transport sessions can provide immersive content from the server 106 to the electronic device 101. The electronic device 101 selects an operational mode at step 1304. The selected operational mode can be partially used for the loop configuration. In some cases, the operational mode can include at least one of: a HUD mode, a 2D mode, a media mode, a desktop mode, a room MR mode, an area MR mode, and an outside MR mode. Also, in some cases, the operational mode can be selected based on data from at least one of a camera, a depth sensor, and an IMU. The electronic device 101 performs a loop configuration for the content based on the transport session between the XR device and the server 106 at step 1306. A transport session can be a layered coding transport (LCT) channel uniquely identified by a transport session identifier. For media delivery, a transport session can carry a media component. A transport session can carry one or more objects that are typically related to a representation of a media component.

The electronic device 101 provides pose information based on parameters of the loop configuration to the server 106 at step 1308. The parameters of the loop configuration can include at least one of a pose delivery mode, a media session loop setting, and a frame recycling flag. In some cases, the pose delivery mode can include an offline mode where the pose information is not sent to the server 106, a periodic mode where the pose information is periodically sent to the server 106, and a trigger mode where the pose information is sent only when triggered by the XR device. Also, in some cases, the media session loop setting can include a first variable to indicate future transmission of pose information to the server 106 and a second variable to indicate pre-rendering of the content by the server 106.

The electronic device 101 receives pre-rendered content based on the provided pose information at step 1310. The pre-rendered content can be ignored or not sent based on the pose information indicating frame recycling. In embodiments with AR glasses 210 and a tethered electronic device 212, for example, the pre-rendered content can always be transmitted from the server 106 to the tethered electronic device 212, and the tethered electronic device 212 can perform additional processing based on an updated head pose received from the AR glasses 210. Thus, the tethered electronic device 212 can determine whether to transmit the content to the AR glasses 210 or wait until receiving a request for the content from the AR glasses 210. The electronic device 101 can process and display the content on the XR device at step 1312. When the head pose movement is less than at least one associated threshold, the content can be a recycled frame. When the head pose movement is greater than at least one associated threshold, the content can be a new frame received from the server. When the head pose movement is greater than at least one associated threshold and an anchor or anchor view exists for the current head pose, the content can be the anchor view with modifications for movement within the at least one associated threshold of the anchor view

Although FIGURE 13 illustrates one example of another method 1300 for deferred rendering on an XR device, various changes may be made to FIGURE 13. For example, while shown as a series of steps, various steps in FIGURE 13 may overlap, occur in parallel, occur in a different order, or occur any number of times.

Although this disclosure has been described with example embodiments, various changes and modifications may be suggested to one skilled in the art. It is intended that this disclosure encompass such changes and modifications as fall within the scope of the appended claims.

## Claims

1. A method performed by an extended reality, XR, device for rendering, the method comprising:

   establishing (428), with a server, a transport session for content on the XR device;
   transmitting (522), to the server, a loop configuration for the content based on the transport session between the XR device and the server;
   providing (434), to the server, pose information based on parameters of the loop configuration;
   receiving (438), from the server, pre-rendered content based on the pose information; and
   processing and displaying the pre-rendered content,
   wherein the parameters of the loop configuration include at least one of: at least one of pose delivery modes, a media session loop setting, and a frame recycling flag indicating whether the XR device performs frame recycling, and
   wherein the media session loop setting is configured to control whether the XR device transmits the pose information and whether the XR device receives the pre-rendered content.

2. The method of claim 1, wherein during the frame recycling, the XR device reprojects a previously-rendered frame to produce a subsequent frame for rendering, wherein reprojecting the previously-rendered frame does not result in occlusion holes or artifacts in the subsequent frame.

3. The method of claim 1, wherein:
   the pose delivery modes comprise:

an offline mode where the pose information is not transmitted to the server;
a periodic mode where the pose information is periodically transmitted to the server; and
a trigger mode where the pose information is transmitted to the server only when triggered by the XR device.

4. The method of claim 1, wherein:
the media session loop setting comprises:

a first variable indicating future transmission of the pose information to the server; and
a second variable indicating pre-rendering of the content by the server.

5. The method of claim 1, further comprising:
selecting an operational mode of the XR device, the selected operational mode at least partly used for the loop configuration.

6. The method of claim 5, wherein the operational mode comprises at least one of: a head's up display, HUD, mode, a two-dimensional, 2D, mode, a media mode, a desktop augmented reality, AR, mode, a room mixed reality, MR, mode, an area MR mode, and an outside MR mode.

7. The method of claim 5, wherein:

the XR device includes at least one camera, at least one depth sensor, and at least one inertial measurement unit, IMU; and
the operational mode is selected based on data from at least one of: the at least one camera, the at least one depth sensor, and the at least one IMU.

8. An extended reality, XR, device for rendering, comprising:

a transceiver configured to communicate with a server; and
at least one processing device operably coupled to the transceiver and configured to:

establish (428), with the server, a transport session for content on the XR device;
transmit (522), to the server, a loop configuration for the content based on the transport session between the XR device and the server;
provide (434), to the server, pose information based on parameters of the loop configuration;
receive (438), from the server, pre-rendered content based on the pose information; and
process and display the pre-rendered content,
wherein the parameters of the loop configuration include at least one of: at least one of pose delivery modes, a media session loop setting, and a frame recycling flag indicating whether the XR device performs frame recycling, and
wherein the media session loop setting is configured to control whether the XR device transmits the pose information and whether the XR device receives the pre-rendered content.

9. The XR device of claim 8, wherein during the frame recycling, the XR device reprojects a previously-rendered frame to produce a subsequent frame for rendering, wherein reprojecting the previously-rendered frame does not result in occlusion holes or artifacts in the subsequent frame.

10. The XR device of claim 8, wherein:
the pose delivery modes comprise:

an offline mode where the pose information is not sent to the server;
a periodic mode where the pose information is periodically sent to the server; and
a trigger mode where the pose information is sent to the server only when triggered by the XR device.

11. The XR device of claim 8, wherein:
the media session loop setting comprises:

a first variable indicating future transmission of the pose information to the server; and
a second variable indicating pre-rendering of the content by the server.

12. The XR device of claim 8, wherein:

the at least one processing device is further configured to select an operational mode of the XR device; and
the selected operational mode at least partly is used for the loop configuration.

13. The XR device of claim 12, wherein the operational mode comprises at least one of: a head's up display, HUD, mode, a two-dimensional, 2D, mode, a media mode, a desktop augmented reality, AR, mode, a room mixed reality, MR, mode, an area MR mode, and an outside MR mode.

14. The XR device of claim 12, wherein:

the XR device further includes at least one camera, at least one depth sensor, and at least one inertial measurement unit, IMU; and
the at least one processing device is configured to select the operational mode based on data from at least one of: the at least one camera, the at least one depth sensor, and the at least one IMU.

15. A non-transitory machine readable medium containing instructions that when executed cause at least one processor to:

establish, with a server, a transport session for content on an extended reality, XR, device;
transmit, to the server a loop configuration for the content based on the transport session between the XR device and the server;
provide, to the server, pose information based on parameters of the loop configuration;
receive, from the server, pre-rendered content based on the pose information; and
process and display the pre-rendered content,
wherein the parameters of the loop configuration include at least one of: at least one of pose delivery modes, a media session loop setting, and a frame recycling flag indicating whether the XR device performs frame recycling, and
wherein the media session loop setting is configured to control whether the XR device transmits the pose information and whether the XR device receives the pre-rendered content.

**Patentansprüche**

1. Verfahren, das durch eine Vorrichtung der erweiterten Realität, XR, zum Rendern durchgeführt wird, wobei das Verfahren Folgendes umfasst:

Einrichten (428), mit einem Server, einer Transportsitzung für Inhalt auf der XR-Vorrichtung;
Übertragen (522), an den Server, einer Schleifenkonfiguration für den Inhalt basierend auf der Transportsitzung zwischen der XR-Vorrichtung und dem Server;
Bereitstellen (434), an den Server, von Poseninformationen basierend auf Parametern der Schleifenkonfiguration;
Empfangen (438), von dem Server, von vorgerendertem Inhalt basierend auf den Poseninformationen; und
Verarbeiten und Anzeigen des vorgerenderten Inhalts,
wobei die Parameter der Schleifenkonfiguration zumindest eines von Folgendem einschließen: zumindest einen von Posenbereitstellungsmodi, eine Mediensitzungsschleifeneinstellung und ein Frame-Recycling-Flag, das angibt, ob die XR-Vorrichtung Frame-Recycling durchführt, und
wobei die Mediensitzungsschleifeneinstellung konfiguriert ist, zu steuern, ob die XR-Vorrichtung die Poseninformationen überträgt und ob die XR-Vorrichtung den vorgerenderten Inhalt empfängt.

2. Verfahren nach Anspruch 1, wobei die XR-Vorrichtung während des Frame-Recyclings einen zuvor gerenderten Frame erneut projiziert, um einen nachfolgenden Frame zum Rendern zu erzeugen, wobei das erneute Projizieren des zuvor gerenderten Frames nicht zu Okklusionslöchern oder Artefakten in dem nachfolgenden Frame führt.

3. Verfahren nach Anspruch 1, wobei:
die Posenbereitstellungsmodi Folgendes umfassen:

einen Offline-Modus, in dem die Poseninformationen nicht an den Server übertragen werden;

einen periodischen Modus, in dem die Poseninformationen periodisch an den Server übertragen werden; und einen Auslösermodus, in dem die Poseninformationen nur dann an den Server übertragen werden, wenn sie von der XR-Vorrichtung ausgelöst werden.

4. Verfahren nach Anspruch 1, wobei:
die Mediensitzungsschleifeneinstellung Folgendes umfasst:

eine erste Variable, die eine zukünftige Übertragung der Poseninformationen an den Server angibt; und
eine zweite Variable, die ein Vor-Rendering des Inhalts durch den Server angibt.

5. Verfahren nach Anspruch 1, ferner umfassend:
Auswählen eines Betriebsmodus der XR-Vorrichtung, wobei der ausgewählte Betriebsmodus zumindest teilweise für die Schleifenkonfiguration verwendet wird.

6. Verfahren nach Anspruch 5, wobei der Betriebsmodus zumindest eines von Folgendem umfasst: einen Head-up-Anzeige-, HUD-, Modus, einen zweidimensionalen, 2D-, Modus, einen Medienmodus, einen Desktop-Modus der ergänzten Realität, AR, einen Raum-Modus der gemischten Realität, MR, einen Flächen-MR-Modus und einen Außen-MR-Modus.

7. Verfahren nach Anspruch 5, wobei:

die XR-Vorrichtung zumindest eine Kamera, zumindest einen Tiefensensor und zumindest eine Trägheitsmesseinheit, IMU, einschließt; und
der Betriebsmodus basierend auf Daten von zumindest einem von Folgendem ausgewählt wird: der zumindest einen Kamera, dem zumindest einen Tiefensensor und der zumindest einen IMU.

8. Vorrichtung der erweiterten Realität, XR, zum Rendern, umfassend:

einen Transceiver, der konfiguriert ist, mit einem Server zu kommunizieren; und
zumindest eine Verarbeitungsvorrichtung, die betriebsfähig mit dem Transceiver gekoppelt ist und zu Folgendem konfiguriert ist:

Einrichten (428), mit dem Server, einer Transportsitzung für Inhalt auf der XR-Vorrichtung;
Übertragen (522), an den Server, einer Schleifenkonfiguration für den Inhalt basierend auf der Transportsitzung zwischen der XR-Vorrichtung und dem Server;
Bereitstellen (434), an den Server, von Poseninformationen basierend auf Parametern der Schleifenkonfiguration;
Empfangen (438), von dem Server, von vorgerendertem Inhalt basierend auf den Poseninformationen; und
Verarbeiten und Anzeigen des vorgerenderten Inhalts,
wobei die Parameter der Schleifenkonfiguration zumindest eines von Folgendem einschließen: zumindest einen von Posenbereitstellungsmodi, eine Mediensitzungsschleifeneinstellung und ein Frame-Recycling-Flag, das angibt, ob die XR-Vorrichtung Frame-Recycling durchführt, und
wobei die Mediensitzungsschleifeneinstellung konfiguriert ist, zu steuern, ob die XR-Vorrichtung die Poseninformationen überträgt und ob die XR-Vorrichtung den vorgerenderten Inhalt empfängt.

9. XR-Vorrichtung nach Anspruch 8, wobei die XR-Vorrichtung während des Frame-Recyclings einen zuvor gerenderten Frame erneut projiziert, um einen nachfolgenden Frame zum Rendern zu erzeugen, wobei das erneute Projizieren des zuvor gerenderten Frames nicht zu Okklusionslöchern oder Artefakten in dem nachfolgenden Frame führt.

10. XR-Vorrichtung nach Anspruch 8, wobei:
die Posenbereitstellungsmodi Folgendes umfassen:

einen Offline-Modus, in dem die Poseninformationen nicht an den Server gesendet werden;
einen periodischen Modus, in dem die Poseninformationen periodisch an den Server gesendet werden; und
einen Auslösermodus, in dem die Poseninformationen nur dann an den Server gesendet werden, wenn sie von der XR-Vorrichtung ausgelöst werden.

**11.** XR-Vorrichtung nach Anspruch 8, wobei:
die Mediensitzungsschleifeneinstellung Folgendes umfasst:

eine erste Variable, die eine zukünftige Übertragung der Poseninformationen an den Server angibt; und
eine zweite Variable, die ein Vor-Rendering des Inhalts durch den Server angibt.

**12.** XR-Vorrichtung nach Anspruch 8, wobei:

die zumindest eine Verarbeitungsvorrichtung ferner konfiguriert ist, einen Betriebsmodus der XR-Vorrichtung auszuwählen; und
der ausgewählte Betriebsmodus zumindest teilweise für die Schleifenkonfiguration verwendet wird.

**13.** XR-Vorrichtung nach Anspruch 12, wobei der Betriebsmodus zumindest eines von Folgendem umfasst: einen Head-up-Anzeige-, HUD-, Modus, einen zweidimensionalen, 2D-, Modus, einen Medienmodus, einen Desktop-Modus der ergänzten Realität, AR, einen Raum-Modus der gemischten Realität, MR, einen Flächen-MR-Modus und einen Außen-MR-Modus.

**14.** XR-Vorrichtung nach Anspruch 12, wobei:

die XR-Vorrichtung ferner zumindest eine Kamera, zumindest einen Tiefensensor und zumindest eine Trägheitsmesseinheit, IMU, einschließt; und
die zumindest eine Verarbeitungsvorrichtung konfiguriert ist, den Betriebsmodus basierend auf Daten von zumindest einem von Folgendem auszuwählen: der zumindest einen Kamera, dem zumindest einen Tiefensensor und der zumindest einen IMU.

**15.** Nicht transitorisches, maschinenlesbares Medium, das Anweisungen enthält, die, wenn sie ausgeführt werden, zumindest einen Prozessor zu Folgendem veranlassen:

Einrichten, mit einem Server, einer Transportsitzung für Inhalt auf einer Vorrichtung der erweiterten Realität, XR;
Übertragen, an den Server, einer Schleifenkonfiguration für den Inhalt basierend auf der Transportsitzung zwischen der XR-Vorrichtung und dem Server;
Bereitstellen, an den Server, von Poseninformationen basierend auf Parametern der Schleifenkonfiguration;
Empfangen, von dem Server, von vorgerendertem Inhalt basierend auf der Poseninformationen; und
Verarbeiten und Anzeigen des vorgerenderten Inhalts,
wobei die Parameter der Schleifenkonfiguration zumindest eines von Folgendem einschließen: zumindest eine von Posenbereitstellungsmodi, einer Mediensitzungsschleifeneinstellung und einem Frame-Recycling-Flag, das angibt, ob die XR-Vorrichtung Frame-Recycling durchführt, und
wobei die Mediensitzungsschleifeneinstellung konfiguriert ist, zu steuern, ob die XR-Vorrichtung die Poseninformationen überträgt und ob die XR-Vorrichtung den vorgerenderten Inhalt empfängt.

**Revendications**

**1.** Procédé de restitution exécuté par un dispositif de réalité étendue, XR, le procédé comprenant :

l'établissement (428), avec un serveur, d'une session de transport de contenu sur le dispositif XR ;
la transmission (522), au serveur, d'une configuration de boucle pour le contenu sur la base de la session de transport entre le dispositif XR et le serveur ;
la fourniture (434), au serveur, d'informations de pose sur la base de paramètres de la configuration de boucle ;
la réception (438), en provenance du serveur, d'un contenu pré-restitué sur la base des informations de pose ; et
le traitement et l'affichage du contenu pré-restitué,
dans lequel les paramètres de la configuration de boucle comprennent au moins l'un de : au moins l'un de modes de livraison de pose, un paramétrage de la boucle de session multimédia et un indicateur de recyclage de trame indiquant si le dispositif XR effectue un recyclage de trame, et
dans lequel le paramétrage de la boucle de session multimédia est configuré pour commander si le dispositif XR transmet les informations de pose et si le dispositif XR reçoit le contenu pré-restitué.

**2.** Procédé selon la revendication 1, dans lequel pendant le recyclage de trame, le dispositif XR reprojecte une trame précédemment restituée pour produire une trame suivante à restituer, dans lequel la reprojection de la trame précédemment restituée n'entraîne pas de trous d'occlusion ni d'artefacts dans la trame suivante.

3. Procédé selon la revendication 1, dans lequel :
les modes de livraison de pose comprennent :

un mode hors ligne dans lequel les informations de pose ne sont pas transmises au serveur ;
un mode périodique dans lequel les informations de pose sont transmises périodiquement au serveur ; et
un mode déclenché dans lequel les informations de pose sont transmises au serveur uniquement lorsqu'elles sont déclenchées par le dispositif XR.

4. Procédé selon la revendication 1, dans lequel :
le paramétrage de la boucle de session multimédia comprend :

une première variable indiquant la transmission future des informations de pose au serveur ; et
une seconde variable indiquant la pré-restitution du contenu par le serveur.

5. Procédé selon la revendication 1, comprenant en outre :
la sélection d'un mode de fonctionnement du dispositif XR, le mode de fonctionnement sélectionné étant au moins partiellement utilisé pour la configuration de boucle.

6. Procédé selon la revendication 5, dans lequel le mode de fonctionnement comprend au moins l'un de : un mode d'affichage tête haute, HUD, un mode bidimensionnel, 2D, un mode multimédia, un mode de réalité augmentée, AR, de bureau, un mode de réalité mixte, MR, de pièce, un mode MR de zone et un mode MR extérieur.

7. Procédé selon la revendication 5, dans lequel :

le dispositif XR comprend au moins une caméra, au moins un capteur de profondeur et au moins une unité de mesure inertielle, IMU ; et
le mode opérationnel est sélectionné sur la base de données provenant d'au moins l'un de : l'au moins une caméra, l'au moins un capteur de profondeur et l'au moins une IMU.

8. Dispositif de restitution de réalité étendue, XR, comprenant :

un émetteur-récepteur configuré pour communiquer avec un serveur ; et
au moins un dispositif de traitement couplé de manière opérationnelle à l'émetteur-récepteur et configuré pour :

établir (428), avec le serveur, une session de transport de contenu sur le dispositif XR ;
transmettre (522), au serveur, une configuration de boucle pour le contenu sur la base de la session de transport entre le dispositif XR et le serveur ;
fournir (434), au serveur, des informations de pose sur la base de paramètres de la configuration de boucle ;
recevoir (438), en provenance du serveur, un contenu pré-restitué sur la base des informations de pose ; et
traiter et afficher le contenu pré-restitué,
dans lequel les paramètres de la configuration de boucle comprennent au moins l'un de : au moins l'un de modes de livraison de pose, un paramétrage de la boucle de session multimédia et un indicateur de recyclage de trame indiquant si le dispositif XR effectue un recyclage de trame, et
dans lequel le paramétrage de la boucle de session multimédia est configuré pour commander si le dispositif XR transmet les informations de pose et si le dispositif XR reçoit le contenu pré-restitué.

9. Dispositif XR selon la revendication 8, dans lequel pendant le recyclage de trame, le dispositif XR reprojecte une trame précédemment restituée pour produire une trame suivante à restituer, dans lequel la reprojection de la trame précédemment restituée n'entraîne pas de trous d'occlusion ni d'artefacts dans la trame suivante.

10. Dispositif XR selon la revendication 8, dans lequel :
les modes de livraison de pose comprennent :

un mode hors ligne dans lequel les informations de pose ne sont pas envoyées au serveur ;
un mode périodique dans lequel les informations de pose sont envoyées périodiquement au serveur ; et

un mode déclenché dans lequel les informations de pose sont envoyées au serveur uniquement lorsqu'elles sont déclenchées par le dispositif XR.

**11.** Dispositif XR selon la revendication 8, dans lequel :
le paramétrage de la boucle de session multimédia comprend :

une première variable indiquant la transmission future des informations de pose au serveur ; et
une seconde variable indiquant la pré-restitution du contenu par le serveur.

**12.** Dispositif XR selon la revendication 8, dans lequel :

l'au moins un dispositif de traitement est en outre configuré pour sélectionner un mode de fonctionnement du dispositif XR ; et
le mode de fonctionnement sélectionné est au moins partiellement utilisé pour la configuration de boucle.

**13.** Dispositif XR selon la revendication 12, dans lequel le mode de fonctionnement comprend au moins l'un de : un mode d'affichage tête haute, HUD, un mode bidimensionnel, 2D, un mode multimédia, un mode de réalité augmentée, AR, de bureau, un mode de réalité mixte, MR, de pièce, un mode MR de zone et un mode MR extérieur.

**14.** Dispositif XR selon la revendication 12, dans lequel :

le dispositif XR comprend en outre au moins une caméra, au moins un capteur de profondeur et au moins une unité de mesure inertielle, IMU ; et
l'au moins un dispositif de traitement est configuré pour sélectionner le mode opérationnel sur la base de données provenant d'au moins l'un de : l'au moins une caméra, l'au moins un capteur de profondeur et l'au moins une IMU.

**15.** Support lisible par machine non transitoire contenant des instructions qui, lorsqu'elles sont exécutées, amènent au moins un processeur à :

établir, avec un serveur, une session de transport de contenu sur un dispositif de réalité étendue, XR ;
transmettre, au serveur, une configuration de boucle pour le contenu sur la base de la session de transport entre le dispositif XR et le serveur ;
fournir, au serveur, des informations de pose sur la base de paramètres de la configuration de boucle ;
recevoir, en provenance du serveur, un contenu pré-restitué sur la base des informations de pose ; et
traiter et afficher le contenu pré-restitué,
dans lequel les paramètres de la configuration de boucle comprennent au moins l'un de : au moins l'un de modes de livraison de pose, un paramétrage de la boucle de session multimédia et un indicateur de recyclage de trame indiquant si le dispositif XR effectue un recyclage de trame, et
dans lequel le paramétrage de la boucle de session multimédia est configuré pour commander si le dispositif XR transmet les informations de pose et si le dispositif XR reçoit le contenu pré-restitué.

[Fig. 1]

[Fig. 2]

[Fig. 3A]

EP 4 445 248 B1

[Fig. 3B]

300

AR/MR Application Provider 320
Scene Server

318
316 — 5GMSd AS

314 — 5GMSd AF

Media Access Functions 308
312 — Media Session Handler
310 — Media Client

306 — AR/MR Scene Manager

304 — AR runtime

302 — AR/MR Application

346
Establish media session for each media stream/object
13: Establish transport session(s) for delivery manifest(s) — 348
14: Request & receive delivery manifest(s) — 350
15: Process delivery manifest(s) — 352
16: Configure media pipelines — 354

356
Fetch and render during session
17: Establish transport sessions for content — 358
18: Latest pose information — 360
19: Request immersive media (possibly pose dependent) — 362
20: Immersive media delivery — 364
21: Decode and process media data — 366
22: Pass media data — 368
23: Media rendering, and presentation — 370

[Fig. 4A]

EP 4 445 248 B1

31

[Fig. 4B]

EP 4 445 248 B1

~400

| 302 | 304 | 406 | Media Access Functions ~308 | | 318~ AR/MR Application Provider 320 |
|---|---|---|---|---|---|

| Basic AR/MR Application | AR runtime | AR/MR Lightweight Scene Manager | Media Client (310) | Media Session Handler (312) | 5GMSd AF (314) | 5GMSd AS (316) | Scene Server (320) |
|---|---|---|---|---|---|---|---|

Fetch and render during session

20: Establish transport sessions for content ~428

430~ 21: Start media session

402
Media session loop

22: Latest pose information ~432

23: Send latest pose information ~434

436~ 24: Pre-rendering (based on user's pose)

25: Pre-rendered media delivery ~438

26: Decode and process media data ~440

27: Pass media data ~442

28: Composition, Pose correction, & Media rendering ~444

32

[Fig. 5A]

500

AR/MR Application Provider 320
- Scene Server

318
316 — 5GMSd AS

314 — 5GMSd AF

Media Access Functions 308
- 312 Media Session Handler
- 310 Media Client

406 — AR/MR Lightweight Scene Manager

304 — AR runtime

302 — Basic AR/MR Application

1~8: Identical to steps 1~8 in Figure 3A

9: Select 5GMSd AS/EAS based on the scene discription and device capabilities, and instantiate edge processing — 422

10: Request & receive simplified entry point — 424

11: Process simplified entry point — 426

12~19: Identical to steps 9~16 in Figures 3A and 3B

[Fig. 5B]

[Fig. 6A]

[Fig. 6B]

500

606 — AR/MR application provider

604

Cloud/edge

AR/MR application

AR Functions

Semantical perception

Social integration

Media assets

Scene graph generator

Immersive visual renderer

Immersive audio renderer

AR scene manager

Media AF

Scene description

Decoders

Encoders

Content delivery

Media AS

Media delivery functions

5G System

M8

M5

M4

[Fig. 7]

EP 4 445 248 B1

[Fig. 8]

[Fig. 9]

[Fig. 10]

[Fig. 11]

1100

| XR Application | 1106 |
| --- | --- |

1104

**XR runtime / renderer**

OP-Mode requests / updates

**XRIO service**

App/runtime can request certain op-mode or listen for op-mode changes

1102

| Computer vision / tracking (Pose, planes. hands, gestures, objects etc) | OP-Mode engine |
| --- | --- |

**System services**

1108

| Cameara service | Sensor service | Power | Perf / load |
| --- | --- | --- | --- |

**HAL service**

| Cameara HAL | Sensor HAL | Power HAL | CPU/GPU/VPU/HAL |
| --- | --- | --- | --- |

**HW**

1110  1112

| Cameara | Sensors ..... | Battery | CPU/GPU/VPU ..... |
| --- | --- | --- | --- |

[Fig. 12]

1200

1206 Transfer image delta from UE to HMD

1208 Calculate HP limit

1210 Test data — Fail → 1220 Re-project and display

1210 Test data — Pass → 1212 Head pose delta within limits?

1212 Head pose delta within limits? — Yes → 1214 Re-project and display → 1216 Companion device update? — Yes / No → 1218 Access head pose delta

1212 Head pose delta within limits? — No → 1222 Does anchor exist?

1218 Access head pose delta

1222 Does anchor exist? — No / Yes → 1224 Load image/depth

1202 Access updated images

1204 Scene delta true? — No / Yes

[Fig. 13]

1300

```
                    ┌─────────┐
                    │  Start  │
                    └─────────┘
                         │
                         ▼
        ┌──────────────────────────────────────┐
        │  Establish a transport session for    │──── 1302
        │              content                   │
        └──────────────────────────────────────┘
                         │
                         ▼
        ┌──────────────────────────────────────┐
        │        Select operational mode        │──── 1304
        └──────────────────────────────────────┘
                         │
                         ▼
        ┌──────────────────────────────────────┐
        │  Perform a loop configuration for     │──── 1306
        │            the content                 │
        └──────────────────────────────────────┘
                         │
                         ▼
        ┌──────────────────────────────────────┐
        │        Provide pose information       │──── 1308
        └──────────────────────────────────────┘
                         │
                         ▼
        ┌──────────────────────────────────────┐
        │      Receive pre-rendered content     │──── 1310
        └──────────────────────────────────────┘
                         │
                         ▼
        ┌──────────────────────────────────────┐
        │  Process and display pre-rendered     │──── 1312
        │             content                    │
        └──────────────────────────────────────┘
                         │
                         ▼
                    ┌─────────┐
                    │   End   │
                    └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group SA; Support of 5G Glass-type Augmented Reality / Mixed Reality (AR/MR) devices; (Release 17). *3GPP DRAFT; S4-211545*, 19 November 2021

- [FS_5GSTAR] Updates to 6.2.4. procedures and call flows for STAR and EDGAR based media streaming. *3GPP DRAFT; S4-211407, 3RD GENERATION PARTNERSHIP PROJECT (3GPP)*, 04 November 2021, vol. SA WG4 (20211110 - 20211119)